# EUROPEAN PATENT APPLICATION

(11) **EP 4 641 209 A1**
(43) Date of publication of application: **29.10.2025**
(21) Application number: 25166826.5
(22) Date of filing: 27.03.2025
(51) Int. Cl.: G01N 35/00

(54) **AUTOMATED ANALYZER AND METHOD OF CONTROLLING AUTOMATED ANALYZER**

(30) Priority: 26.04.2024 JP 2024072735
(71) Applicant: JEOL Ltd., Akishima, Tokyo 196-8558 (JP)
(72) Inventor: OGAWA, Toru, Tokyo, 196-8558 (JP)
(74) Representative: Boult Wade Tennant LLP

(57) **Abstract**

An automated analyzer includes: a first turntable that holds a plurality of pre-treatment containers; a first dispensing probe that dispenses a specimen and pre-treatment liquid into one of the pre-treatment containers and generates a pre-treated specimen; a second turntable that holds a plurality of reaction containers; a second dispensing probe that sucks the pre-treated specimen from one of the pre-treatment containers and dispenses the pre-treated specimen into one of the reaction containers; a measurement unit that measures the pre-treated specimen stored in one of the reaction containers; a management unit that determines an order in which the pre-treated specimen stored in one of the pre-treatment containers is dispensed by the second dispensing probe, based on priority of the pre-treated specimen, when the pre-treated specimen becomes dispensable into one of the reaction containers; and a control unit that causes the second dispensing probe to dispense the pre-treated specimen in accordance with the order determined by the management unit.

## Description

### BACKGROUND OF THE INVENTION

### Field of the Invention

The present invention relates to an automated analyzer and a method of controlling the automated analyzer.

### Description of Related Art

With an automated analyzer, qualitative analyses and quantitative analyses of a biological specimen (specimen) such as blood, urine or the like can be performed. For example, JP 2017-129393 A discloses a biochemical analyzer for analyzing various components contained in a specimen such as blood or urine. In the JP 2017-129393 A, after the specimen is diluted, the specimen is dispensed into a reaction container and then, the specimen is mixed with a reagent corresponding to an analysis item in the reaction container so as to induce a reaction. Thereafter, the absorbance of the diluted specimen, which was dispensed into the reaction container, is measured and is converted into concentration, allowing an analysis on a substance to be measured contained in the specimen.

In such an automated analyzer, since processing of the specimen proceeds in an order of being input into the device, the specimen with higher priority cannot be processed rapidly.

### SUMMARY OF THE INVENTION

According to a first aspect of the present disclosure, there is provided an automated analyzer including:
a first turntable that holds a plurality of pre-treatment containers;
a first dispensing probe that dispenses a specimen and pre-treatment liquid into one of the pre-treatment containers and generates a pre-treated specimen;
a second turntable that holds a plurality of reaction containers;
a second dispensing probe that sucks the pre-treated specimen from one of the pre-treatment containers and dispenses the sucked pre-treated specimen into one of the reaction containers;
a measurement unit that measures the pre-treated specimen stored in one of the reaction containers;
a management unit that determines an order in which the pre-treated specimen stored in one of the pre-treatment containers is dispensed by the second dispensing probe, based on priority of the pre-treated specimen, when the pre-treated specimen becomes dispensable into one of the reaction containers; and
a control unit that causes the second dispensing probe to dispense the pre-treated specimen in accordance with the order determined by the management unit.

According to a second aspect of the present disclosure, there is provided a method of controlling an automated analyzer including:
a first turntable that holds a plurality of pre-treatment containers;
a first dispensing probe that dispenses a specimen and pre-treatment liquid into one of the pre-treatment containers and generates a pre-treated specimen;
a second turntable that holds a plurality of reaction containers;
a second dispensing probe that sucks the pre-treated specimen from one of the pre-treatment containers and dispenses the sucked pre-treated specimen into one of the reaction containers; and
a measurement unit that measures the pre-treated specimen stored in one of the reaction containers,
the method including:
   a process of determining an order in which the pre-treated specimen stored in one of the pre-treatment containers is dispensed by the second dispensing probe, based on priority of the pre-treated specimen, when the pre-treated specimen becomes dispensable into one of the reaction containers; and
   a process of causing the second dispensing probe to dispense the pre-treated specimen in accordance with the determined order.

### BRIEF DESCRIPTION OF THE DRAWINGS

FIG. 1 is a diagram illustrating an example of a configuration of an automated analyzer according to the first embodiment.
FIG. 2 is a diagram illustrating a configuration of a controller.
FIG. 3 is a diagram illustrating a basic cycle of an automated analyzer.
FIG. 4 is a diagram illustrating a basic operation of an automated analyzer.
FIG. 5 is a diagram illustrating an operation of a dilution turntable.
FIG. 6 is a diagram illustrating an operation of a dilution turntable.
FIG. 7 illustrates an operation of a dilution turntable.
FIG. 8 illustrates a management register of the dilution turntable.
FIG. 9 illustrates an expansion register.
FIG. 10 illustrates an expansion register.
FIG. 11 illustrates an operation of a dilution turntable.
FIG. 12 illustrates a management register and an expansion register of a third cycle.
FIG. 13 illustrates a management register and an expansion register of a sixth cycle.
FIG. 14 illustrates a management register of and an expansion register of a seventh cycle.
FIG. 15 illustrates a management register and an expansion register of an eighth cycle.
FIG. 16 illustrates an example of a state of a management register.
FIG. 17 illustrates a state of a management register and an expansion register in m cycle.
FIG. 18 illustrates a state of a management register and an expansion register in m + 1 cycle.
FIG. 19 illustrates a state of a management register and an expansion register in m + 2 cycle.
FIG. 20 illustrates an example of a state of a management register.
FIG. 21 is a flowchart illustrating an example of processing by a management unit.
FIG. 22 illustrates a state of a management register in n cycle.
FIG. 23 illustrates a state of a management register in n + 1 cycle.
FIG. 24 illustrates a state of a management register in n + 1 cycle.
FIG. 25 illustrates a state of a management register in n + 2 cycle.
FIG. 26 illustrates a state of the management register in n + 5 cycle.
FIG. 27 is a diagram illustrating an example of a configuration of an automated analyzer according to the third embodiment.
FIG. 28 illustrates an example of a state of an expansion register.
FIG. 29 illustrates a state of a management register in n cycle.
FIG. 30 illustrates a state of a management register in n + 1 cycle.
FIG. 31 illustrates a state of a management register in n + 5 cycle.

### DESCRIPTION OF THE INVENTION

According to an embodiment of the present disclosure, there is provided an automated analyzer including:
a first turntable that holds a plurality of pre-treatment containers;
a first dispensing probe that dispenses a specimen and pre-treatment liquid into one of the pre-treatment containers and generates a pre-treated specimen;
a second turntable that holds a plurality of reaction containers;
a second dispensing probe that sucks the pre-treated specimen from one of the pre-treatment containers and dispenses the sucked pre-treated specimen into one of the reaction containers;
a measurement unit that measures the pre-treated specimen stored in one of the reaction containers;
a management unit that determines an order in which the pre-treated specimen stored in one of the pre-treatment containers is dispensed by the second dispensing probe, based on priority of the pre-treated specimen, when the pre-treated specimen becomes dispensable into one of the reaction containers; and
a control unit that causes the second dispensing probe to dispense the pre-treated specimen in accordance with the order determined by the management unit.

In the automated analyzer as above, the management unit determines an order in which the pre-treated specimen stored in the pre-treatment container is dispensed by the second dispensing probe based on the priority of the pre-treated specimen, when the pre-treated specimen becomes capable of being dispensed into the reaction container. Thus, in the automated analyzer as above, even when the specimen with lower priority is dispensed into the pre-treatment container prior to the specimen with higher priority, the specimen with the higher priority can be dispensed into the reaction container prior to the specimen with the lower priority. Therefore, in the automated analyzer as above, the specimen with the higher priority can be treated rapidly.

According to an embodiment of the present disclosure, there is provided a method of controlling an automated analyzer including:
a first turntable that holds a plurality of pre-treatment containers;
a first dispensing probe that dispenses a specimen and pre-treatment liquid into one of the pre-treatment containers and generates a pre-treated specimen;
a second turntable that holds a plurality of reaction containers;
a second dispensing probe that sucks the pre-treated specimen from one of the pre-treatment containers and dispenses the sucked pre-treated specimen into one of the reaction containers; and
a measurement unit that measures the pre-treated specimen stored in one of the reaction containers,
the method including:
   a process of determining an order in which the pre-treated specimen stored in the pre-treatment container is dispensed by the second dispensing probe, based on priority of the pre-treated specimen, when the pre-treated specimen becomes dispensable into one of the reaction containers; and
   a process of causing the second dispensing probe to dispense the pre-treated specimen in accordance with the determined order.

The control method of the automated analyzer as above includes a process of determining an order in which the pre-treated specimen stored in one of the pre-treatment containers is dispensed by the second dispensing probe based on the priority of the pre-treated specimen, when the pre-treated specimen becomes capable of being dispensed into a reaction container. Thus, in the control method of the automated analyzer as above, even when the specimen with lower priority is dispensed into the pre-treatment container prior to the specimen with higher priority, the specimen with the higher priority can be dispensed into the reaction container prior to the specimen with the lower priority. Therefore, in the control method of the automated analyzer as above, the specimen with higher priority can be treated rapidly.

Now preferred embodiments of the invention will be described in detail with reference to the drawings. The embodiments described below are not intended to unduly limit the contents of the invention described in the claims. Further, all of the components described below are not necessarily essential requirements of the invention.

### 1. First embodiment

### 1.1. Configuration of automated analyzer

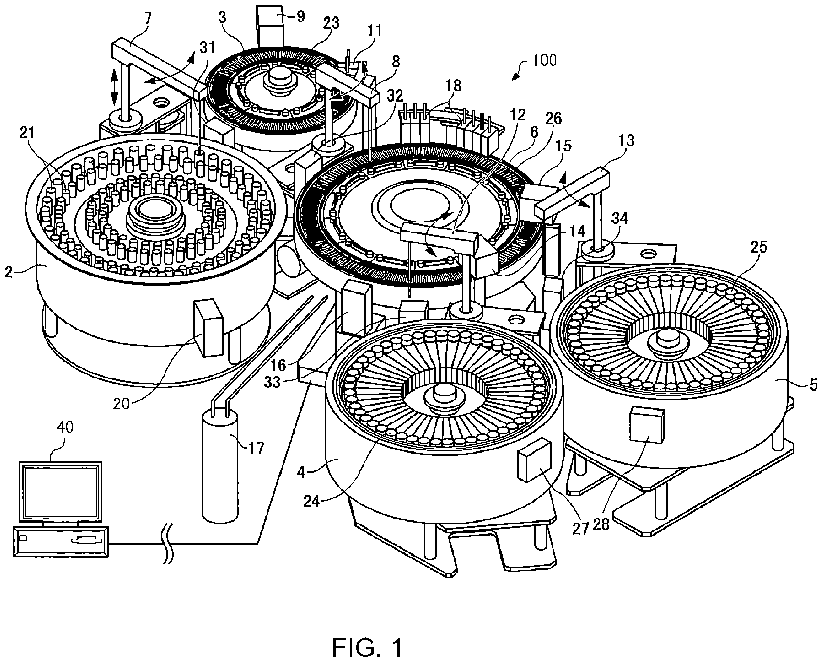

First, an automated analyzer according to the first embodiment will be described with reference to the drawings. FIG. 1 is a diagram illustrating an example of a configuration of an automated analyzer 100 according to the first embodiment.

The automated analyzer 100 is, for example, a biochemical analyzer that automatedly measures the amount of a specific component contained in a specimen, e.g., blood or urine collected from a living body. Note that the automated analyzer 100 may be configured for measurements widely conducted in the fields of, for example, immune serum, tumor markers and the like in addition to biochemical items.

As illustrated in FIG. 1, the automated analyzer 100 includes a sample turntable 2, a dilution turntable 3 (an example of a first turntable), a first reagent turntable 4, a second reagent turntable 5, a reaction turntable 6 (an example of a second turntable), an original-specimen dispensing probe 7 (an example of a first dispensing probe), a diluted-specimen dispensing probe 8 (an example of a second dispensing probe), a dilution/stirring mechanism 9, a dilution-container cleaning mechanism 11, a first reagent-dispensing probe 12, a second reagent-dispensing probe 13, a first reaction-liquid stirring mechanism 14, a second reaction-liquid stirring mechanism 15, a multiwavelength photometer 16 (an example of a measurement unit), a thermostat 17, a reaction-container cleaning mechanism 18, and a controller 40.

The sample turntable 2, the dilution turntable 3, the first reagent turntable 4, the second reagent turntable 5, and the reaction turntable 6 are rotatably supported along a circumferential direction by a drive mechanism, not shown, and rotates at a predetermined speed in each predetermined angular range in the circumferential direction.

The sample turntable 2 holds a plurality of sample containers 21 for storing a specimen (original specimen). In the sample container 21, a specimen such as blood, urine or the like is stored. In the sample turntable 2, a reader 20 for reading identification information on the specimen is disposed. The reader 20 reads a specimen ID (identification information) from a barcode given on a side surface of the sample container 21 stored in the sample turntable 2. The identification information read by the reader 20 is sent to the controller 40. As a result, in the controller 40, the specimen stored in the sample container 21 can be managed.

The dilution turntable 3 holds a plurality of dilution containers 23 (an example of a pre-treatment container). In the dilution turntable 3, a plurality of dilution containers 23 are arrayed in the circumferential direction. In the dilution container 23, the diluted original specimen, that is, the specimen which was sucked from the sample container 21 located in the sample turntable 2 and diluted, that is, the diluted specimen is stored.

The first reagent turntable 4 holds a plurality of first reagent containers 24. In the first reagent turntable 4, a plurality of the first reagent containers 24 are arrayed in the circumferential direction. The second reagent turntable 5 holds a plurality of second reagent containers 25. In the second reagent turntable 5, a plurality of the second reagent containers 25 are arrayed in the circumferential direction.

In the first reagent container 24, the first reagent is stored, and in the second reagent container 25, the second reagent is stored. Note that, when the first reagent container 24 and the second reagent container 25 are not distinguished, they are referred to simply as the "reagent containers".

On the first reagent turntable 4, a first reagent barcode-reader 27 for reading a barcode given to a side surface of the first reagent container 24 is provided. On the second reagent turntable 5, a second reagent barcode-reader 28 for reading a barcode given to the side surface of the second reagent container 25 is provided. Since a position of the reagent container used for the measurement item can be identified by the first reagent barcode-reader 27 and the second reagent barcode-reader 28, the reagent container can be placed at an arbitrary position.

The reaction turntable 6 holds a plurality of reaction containers 26. On the reaction turntable 6, a plurality of the reaction containers 26 are arrayed in the circumferential direction. The reaction turntable 6 intermittently moves the reaction container 26. Into the reaction container 26, the diluted specimen sampled from the dilution container 23 on the dilution turntable 3, the first reagent sampled from the first reagent container 24 of the first reagent turntable 4, and the second reagent sampled from the second reagent container 25 of the second reagent turntable 5 are dispensed. In the reaction container 26, the diluted specimen and the first reagent and the second reagent are stirred, and the reaction is induced.

The original-specimen dispensing probe 7 dispenses the specimen and a diluent into the dilution container 23. The original-specimen dispensing probe 7 sucks a predetermined amount of the specimen from the sample container 21 and pours to the dilution container 23 the sucked specimen and a predetermined amount of the diluent (physiological saline, for example), which is fed from the original-specimen dispensing probe 7 itself. As a result, in the dilution container 23, the specimen is diluted to such concentration of a predetermined multiple, and the diluted specimen is generated. The original-specimen dispensing probe 7 is cleaned by an original-specimen dispensing-probe cleaning mechanism 31.

The diluted-specimen dispensing probe 8 sucks the diluted specimen from the dilution container 23 and dispenses it into the reaction container 26. The diluted-specimen dispensing probe 8 sucks a predetermined amount of the diluted specimen from the dilution container 23 held by the dilution turntable 3 and pours the sucked diluted specimen into the reaction container 26 held by the reaction turntable 6. The diluted-specimen dispensing probe 8 is cleaned by a diluted-specimen dispensing probe cleaning mechanism 32.

The dilution/stirring mechanism 9 inserts a stirring bar, not shown, into the dilution container 23 and stirs the specimen and the diluent. The dilution/stirring mechanism 9 has a first stirring bar and a second stirring bar, for example, and after stirring the diluted specimen by the first stirring bar, stirs the diluted specimen by the second stirring bar.

The dilution-container cleaning mechanism 11 has a suction nozzle for sucking a diluted specimen or a detergent from the dilution container 23 and a pouring nozzle for supplying the detergent into the dilution container 23. The dilution-container cleaning mechanism 11 cleans the dilution container 23 by repeating the supply of the detergent and the sucking of the detergent by the suction nozzle and the pouring nozzle. As a result, the dilution container 23 can be used repeatedly.

The first reagent-dispensing probe 12 sucks a predetermined amount of the first reagent from the first reagent container 24 and pours the sucked first reagent into the reaction container 26. The first reagent-dispensing probe 12 is cleaned by a first reagent-dispensing-probe cleaning mechanism 33.

The second reagent-dispensing probe 13 sucks a predetermined amount of the second reagent from the second reagent container 25 and pours the sucked second reagent into the reaction container 26. The second reagent-dispensing probe 13 is cleaned by a second reagent-dispensing-probe cleaning mechanism 34.

The first reaction-liquid stirring mechanism 14 inserts a stirring bar, which is not illustrated, into the reaction container 26 and stirs the diluted specimen and the first reagent. The second reaction-liquid stirring mechanism 15 inserts a stirring bar, which is not illustrated, into the reaction container 26 and stirs a liquid mixture of the diluted specimen, the first reagent, and the second reagent. The reaction-container cleaning mechanism 18 cleans the inside of the reaction container 26 after the completion of an analysis.

The multiwavelength photometer 16 conducts an optical measurement (colorimetric determination) on the diluted specimen, which has reacted with the first reagent and the second reagent, by using a light-source lamp for emitting a light beam to the reaction container 26. The multiwavelength photometer 16 outputs the amounts of various components in the specimen as absorbances and detects the reaction state of the diluted specimen. Measurement data on the specimen in the multiwavelength photometer 16 is transmitted to a control unit 402.

The thermostat 17 always keeps the temperatures of the reaction containers 26 provided in the reaction turntable 6 constant.

The controller 40 executes processing such as processing of controlling a drive mechanism of each part configuring the automated analyzer 100 and processing of obtaining the measurement data of the specimen and the like.

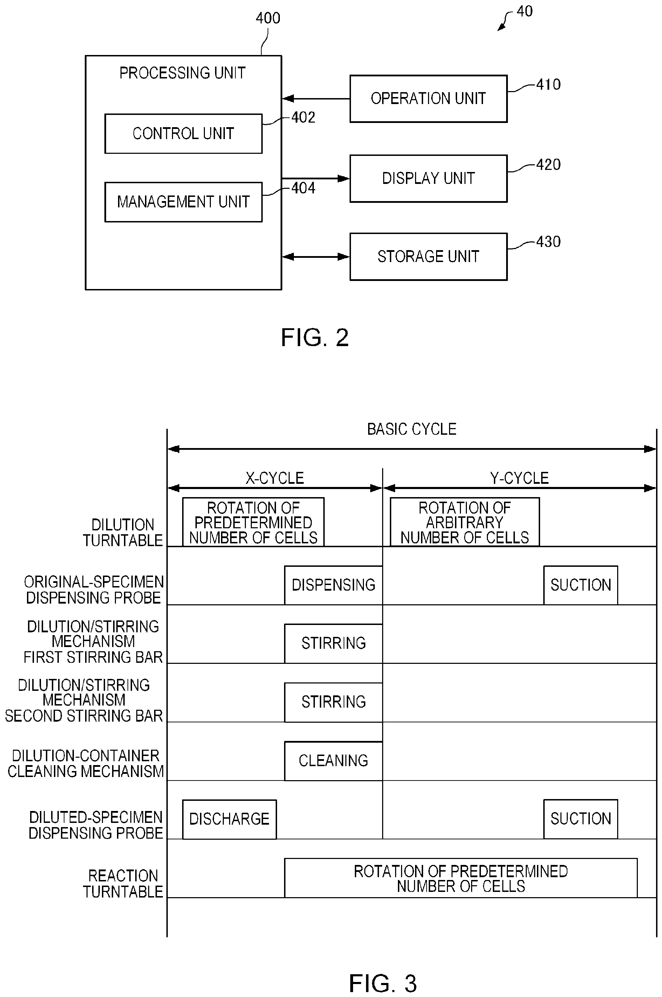

FIG. 2 is a diagram illustrating a configuration of the controller 40. As illustrated in FIG. 2, the controller 40 includes a processing unit 400, an operation unit 410, a display unit 420, and a storage unit 430.

The operation unit 410 performs processing for acquiring an operation signal corresponding to a user operation and transmitting the signal to the processing unit 400. The operation unit 410 can be implemented by an input device, e.g., a button, a key, a touch panel display, or a microphone.

The display unit 420 outputs an image generated by the processing unit 400. The display unit 420 can be implemented by a display, e.g., a liquid crystal display (LCD).

In the storage unit 430, programs and data for various kinds of calculation and control by the processing unit 400 are stored. The storage unit 430 is also used as a work area of the processing unit 400. The storage unit 430 can be implemented by, for example, random access memory (RAM), read only memory (ROM), and a hard disk.

In the storage unit 430, request information for the specimen is stored. The request information for the specimen includes information on measurement items of the specimen and information on priority of the specimen. Note that the priority of the specimen may be set for each measurement item. The request information of the specimen may be obtained from a host computer, not shown.

In addition, in the storage unit 430, specimen information of each specimen is stored. The specimen information includes information such as identification information of the specimen, progress information of the specimen including a status of the specimen and the like.

The progress information is information relating to a progress state of the measurement of the specimen, for example, and includes information on a status of the specimen, a position of the specimen, a history of measurement, end time of the measurement of the specimen and the like. The status of the specimen is information indicating a current measurement state of the specimen. In addition, the progress information includes information on a dispensing error, information indicating that the measurement was discontinued due to an error of the device, information indicating that there is a measurement item requiring re-inspection and the like.

In addition, in the storage unit 430, measurement data is stored as the measurement results of specimens. For example, measurement data on the specimen in the multiwavelength photometer 16 is transmitted to the control unit 402 and is stored in the storage unit 430.

The processing unit 400 performs processing for controlling the parts constituting the automated analyzer 100, processing for displaying a user interface screen or the like on the display unit 420, processing of obtaining the measurement data of the specimen and the like. The functions of the processing unit 400 can be implemented by executing programs by means of various processors (including a Central Processing Unit (CPU)). Note that at least some of the functions of the processing unit 400 may be implemented by a dedicated circuit, e.g., an ASIC (a gate array or the like). The processing unit 400 includes a control unit 402 and a management unit 404.

The control unit 402 controls the parts constituting the automated analyzer 100. The control unit 402 manages the specimen based on the specimen identification information read by the reader 20 and the request information stored in the storage unit 430, for example, and executes processing for performing the measurement (inspection) according to the measurement item of the specimen.

The management unit 404 determines an order in which the diluted-specimen dispensing probe 8 dispenses the diluted specimen based on the priority of the diluted specimen (specimen), when the diluted specimen stored in the dilution container 23 becomes capable of being dispensed into the reaction container 26.

The control unit 402 causes the diluted-specimen dispensing probe 8 to dispense the diluted specimen to the reaction container 26 in accordance with the order determined by the management unit 404.

### 1.2. Operation of automated analyzer

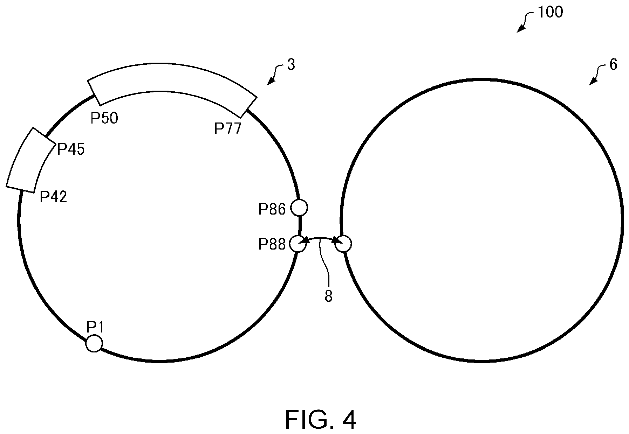

FIG. 3 is a diagram illustrating a basic cycle of the automated analyzer 100. FIG. 4 is a diagram illustrating a basic operation of the automated analyzer 100.

As illustrated in FIG. 3, the dilution turntable 3, the reaction turntable 6, the original-specimen dispensing probe 7, the diluted-specimen dispensing probe 8, the dilution/stirring mechanism 9, and the dilution-container cleaning mechanism 11 perform cycle-operation with a basic cycle illustrated in FIG. 3 as 1 cycle.

The basic cycle includes an X-cycle and a Y-cycle. In the X-cycle, the dilution turntable 3 basically rotates for a predetermined number of cells in the circumferential direction and stops for a certain period of time. While the dilution turntable 3 is stopped, a predetermined operation is performed at each position of the dilution turntable 3.

In the example illustrated in FIG. 4, the dilution turntable 3 has 120 cells on a circumference. In the X-cycle, the dilution turntable 3 basically rotates for 41 cells clockwise in the circumferential direction. In the X-cycle, at a dispensing position P1, the original specimen and the diluent are poured into the dilution container 23 by the original-specimen dispensing probe 7. At a first stirring position P42, the diluted specimen is stirred by the first stirring bar. At a second stirring position P45, the diluted specimen is stirred by the second stirring bar. The diluted specimen dispensed at the dispensing position P1 reaches a dispensable position P86 via the first stirring position P42, a position P83, a position P4, the second stirring position P45 and becomes dispensable into the reaction container 26. At a cleaning-start position P50, cleaning of the dilution container 23 is started by the dilution-container cleaning mechanism 11, and at a cleaning-end position P77, the cleaning of the dilution container 23 is finished.

In the Y-cycle, when there is the dilution container 23 storing the diluted specimen, which is dispensable into the reaction container 26, the dilution turntable 3 rotates in an arbitrary direction by an arbitrary angle and moves the dilution container 23 to a suction position P88. At the suction position P88, the diluted specimen is sucked by the diluted-specimen dispensing probe 8. Note that, in the Y-cycle, a moving direction and a movement amount are set in accordance with a position of the dilution container 23 storing the diluted specimen dispensable into the reaction container 26. That is, in the X-cycle, at whichever position of the dilution turntable 3 the dilution container 23 storing the diluted specimen dispensable into the reaction container 26 is located, in the Y-cycle, the dilution container 23 can be moved to the suction position P88.

In addition, in the Y-cycle, by means of the original-specimen dispensing probe 7, the original specimen is sucked from the sample container 21. The sucked original specimen is dispensed together with the diluent into the dilution container 23 located at the dispensing position P1 in the X-cycle.

The reaction turntable 6 rotates for a predetermined number of cells in the circumferential direction in 1 cycle. In the reaction turntable 6, in the order of dispensing into the reaction container 26, dispensing of the first reagent, dispensing of the second reagent, stirring of the diluted specimen and the reagent and the measurement are performed.

Here, in the X-cycle, when the dilution turntable 3 rotates for 41 cells without fail, after 89 cycles after the diluted specimen was dispensed into the dilution container 23 at the dispensing position P1, the dilution container 23 reaches the cleaning-start position P50 and is cleaned. That is, in the X-cycle in n cycle (n is an arbitrary natural number), the dilution container 23 in which the diluted specimen was generated at the dispensing position P1 reaches the cleaning-start position P50 in the X-cycle in the n + 89 cycle and is cleaned.

Here, when such setting with automated re-inspection is performed, for the specimen whose measurement result of first inspection (inspection at the first time) satisfies a condition of the re-inspection (re-test), the re-inspection is performed by using the diluted specimen used in the first inspection. The condition for the re-inspection is, for example, a case in which the measurement result of the first inspection is outside a reference range or the like.

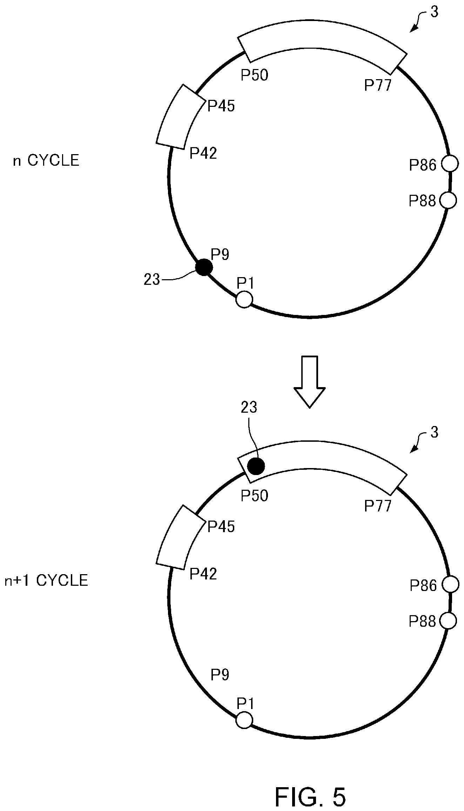

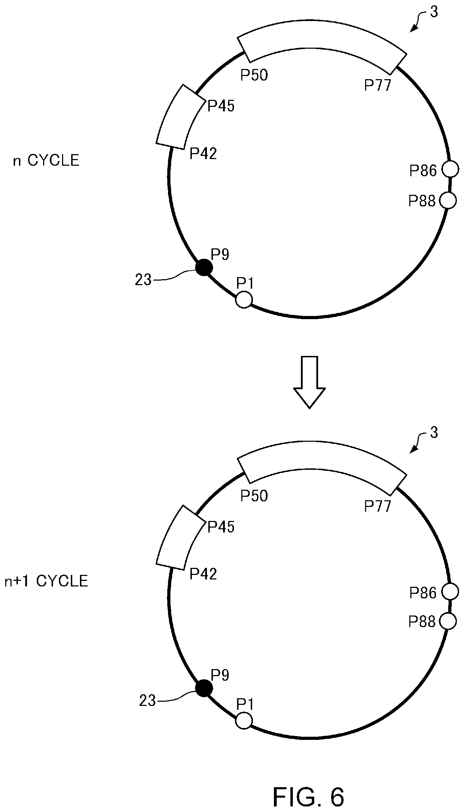

FIG. 5 and FIG. 6 are diagrams illustrating operations of the dilution turntable 3.

The diluted specimen stored in the dilution container 23 located at a determination position P9 in the n cycle basically reaches the cleaning-start position P50 in the n + 1 cycle. Note that, hereinafter, the dilution container 23 located at the determination position P9 is also referred to simply as the dilution container 23 at the determination position P9. In addition, hereinafter, the diluted specimen stored in the dilution container 23 located at the determination position P9 is also referred to simply as the diluted specimen at the determination position P9. The same applies to the other positions.

Here, when it is determined that re-inspection of the diluted specimen at the determination position P9 is not necessary in the n cycle or when, though re-inspection is needed, dispensing of the diluted specimen for the re-inspection has already been performed, as illustrated in FIG. 5, transfer to the cleaning-start position P50 is performed in the X-cycle in the n + 1 cycle. In addition, when the diluted specimen is not stored in the dilution container 23 at the determination position P9, similarly, the dilution container 23 is transferred to the cleaning-start position P50 in the X-cycle in the n + 1 cycle.

On the other hand, when the dispensing for the first inspection has not been performed for the diluted specimen at the determination position P9 in the n cycle, when the measurement data of the first inspection of the diluted specimen at the determination position P9 has not been output, or when the diluted specimen at the determination position P9 needs re-inspection, and the dispensing of the re-inspection has not been performed for the diluted specimen, as illustrated in FIG. 6, the dilution turntable 3 does not rotate in the X-cycle in the n + 1 cycle.

In the following, a case in which these conditions are not satisfied is also said that the rotation conditions are not satisfied. In addition, similarly, the case in which these conditions are satisfied is also said that the rotation conditions are satisfied. That is, when the diluted specimen at the determination position P9 in the n cycle does not satisfy the rotation condition, the dilution turntable 3 does not rotate in the X-cycle in the n + 1 cycle. In addition, when the diluted specimen at the determination position P9 in the n cycle satisfies the rotation condition, in the X-cycle in the n + 1 cycle, the dilution turntable 3 rotates for the predetermined number of cells.

### 1.3. Operation of dilution turntable

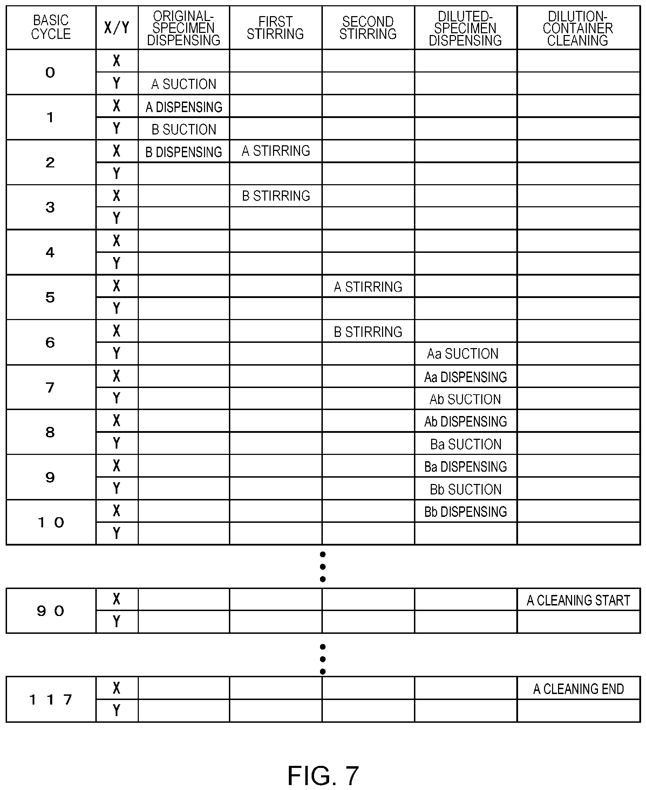

FIG. 7 illustrates an operation of the dilution turntable 3.

In an example illustrated in FIG. 7, for a specimen A and a specimen B, operations of the dilution turntable 3 when a measurement item a and a measurement item b are requested, respectively, will be explained. Here, priority of the measurement item a for the specimen A, priority of the measurement item b for the specimen A, priority of the measurement item a for the specimen B, and priority of the measurement item b for the specimen B are the same.

In the Y-cycle in the 0 cycle, the original-specimen dispensing probe 7 sucks the specimen A from the sample container 21.

In the X-cycle in the first cycle, the original-specimen dispensing probe 7 dispenses (pours) the specimen A and the diluent into the dilution container 23. As a result, the diluted specimen A is generated. In the Y-cycle in the first cycle, the original-specimen dispensing probe 7 sucks the specimen B from the sample container 21.

In the X-cycle in the second cycle, the original-specimen dispensing probe 7 dispenses the specimen B and the diluent into the dilution container 23. As a result, a diluted specimen B is generated. In addition, in the X-cycle in the second cycle, the dilution/stirring mechanism 9 stirs the diluted specimen A in the dilution container 23 by the first stirring bar.

In the X-cycle in the third cycle, the dilution/stirring mechanism 9 stirs the diluted specimen B in the dilution container 23 by the first stirring bar.

In the X-cycle in the fifth cycle, the dilution/stirring mechanism 9 stirs the diluted specimen A in the dilution container 23 by the second stirring bar.

In the X-cycle in the sixth cycle, the dilution/stirring mechanism 9 stirs the diluted specimen B in the dilution container 23 by the second stirring bar. In the sixth cycle, the diluted specimen A becomes capable of being dispensed into the reaction container 26. In the Y-cycle in the sixth cycle, the diluted-specimen dispensing probe 8 sucks the diluted specimen A for the measurement item a (diluted specimen Aa) from the dilution container 23.

In the X-cycle in the seventh cycle, the diluted-specimen dispensing probe 8 dispenses (pours) the diluted specimen Aa into the reaction container 26. In the seventh cycle, the diluted specimen B becomes capable of being dispensed into the reaction container 26. In the Y-cycle in the seventh cycle, the diluted-specimen dispensing probe 8 sucks the diluted specimen A for the measurement item b (diluted specimen Ab) from the dilution container 23.

In the X-cycle in the eighth cycle, the diluted-specimen dispensing probe 8 dispenses the diluted specimen Ab into the reaction container 26. In the Y-cycle in the eighth cycle, the diluted-specimen dispensing probe 8 sucks the diluted specimen B for the measurement item a (diluted specimen Ba) from the dilution container 23.

In the X-cycle in the ninth cycle, the diluted-specimen dispensing probe 8 dispenses the diluted specimen Ba into the reaction container 26. In the Y-cycle in the ninth cycle, the diluted-specimen dispensing probe 8 sucks the diluted specimen B for the measurement item b (diluted specimen Bb) from the dilution container 23.

In the X-cycle in the tenth cycle, the diluted-specimen dispensing probe 8 dispenses the diluted specimen Bb into the reaction container 26.

In the X-cycle in the 90th cycle, the dilution-container cleaning mechanism 11 starts cleaning of the dilution container 23 in which the diluted specimen A is stored. In the X cycle in the 117th cycle, the dilution-container cleaning mechanism 11 ends the cleaning of the dilution container 23 in which the diluted specimen A was stored.

In the reaction turntable 6, the measurement of the diluted specimen by the multiwavelength photometer 16 is performed in the order in which the diluted specimen was dispensed into the reaction container 26. Therefore, in the example illustrated in FIG. 7, the measurement is performed in the order of the diluted specimen Aa, the diluted specimen Ab, the diluted specimen Ba, and the diluted specimen Bb.

### 1.4. Management register of dilution turntable

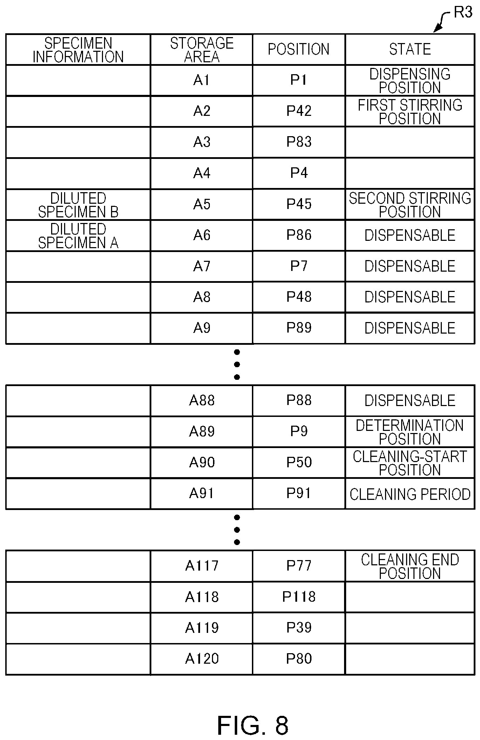

FIG. 8 illustrates a management register R3 of the dilution turntable 3. Note that FIG. 8 illustrates a state of the dilution turntable 3 in the sixth cycle in FIG. 7.

The management register R3 is for managing the diluted specimen on the dilution turntable 3. The management register R3 has a storage area corresponding to the cell of the dilution turntable 3. That is, the management register R3 has 120 storage areas corresponding to the 120 cells of the dilution turntable 3. In each storage area, the specimen information is stored. The management register R3 is controlled by the control unit 402.

In the management register R3, in the X-cycle in the first cycle, at each rotation of the dilution turntable 3 for 41 cells, data stored in the storage area is shifted only by 1 step (1 storage area portion). That is, the data stored in a storage area A1 is stored in a storage area A2, when the dilution turntable 3 rotates for the 41 cells. The management register R3 is a circulating register, and the data stored in a storage area A120 is stored in the storage area A1 after the shift only for 1 step. Note that, in the X-cycle in the first cycle, when the dilution turntable 3 does not rotate, the state of the management register R3 is not changed. That is, the data stored in each storage area is not shifted.

Each storage area of the management register R3 corresponds to a position of the dilution turntable 3 in the X-cycle. FIG. 8 describes a position of the dilution turntable 3 corresponding to each storage area and the state of the diluted specimen at that position.

The storage area A1 of management register R3 corresponds to a dispensing position P1 of the dilution turntable 3. That is, when the information on the diluted specimen A is stored in the storage area A1, the diluted specimen A is located at the dispensing position P1.

The storage area A2 corresponds to the first stirring position P42. A storage area A5 corresponds to the second stirring position P45. A range from the storage area A1 to the storage area A5 corresponds to a preparation period so as to make the diluted specimen dispensable on the dilution turntable 3.

A range from a storage area A6 to a storage area A89 corresponds to a period in which the diluted specimen can be dispensed into the reaction container 26 on the dilution turntable 3. As described above, at whichever position in the dilution turntable 3, the dilution container 23 storing the diluted specimen, which is dispensable into the reaction container 26, is located, in the Y-cycle, the dilution container 23 can be moved to the suction position P88. Thus, if the information on the diluted specimen is stored in the range from the storage area A6 to the storage area A89, the diluted specimen can be dispensed into the reaction container 26. The storage area A89 corresponds to the determination position P9.

A storage area A90 corresponds to the cleaning-start position P50. A storage area A117 corresponds to the cleaning-end position P77. A range from the storage area A90 to the storage area A117 corresponds to a period in which the dilution container 23 is cleaned. Thus, the diluted specimen specified from the information on the diluted specimen stored in the range from the storage area A90 to the storage area A117 cannot be used at that point of time. Therefore, the information on the diluted specimen is stored in the storage area A117 and then, deleted. Note that the information on the diluted specimen may be deleted after being stored in the storage area A120. In the following, the diluted specimen specified by the information on the diluted specimen stored in the storage area A90 will be referred to simply as the diluted specimen in the storage area A90. The same applies to the other storage areas.

### 1.5. Reaction-container expansion register

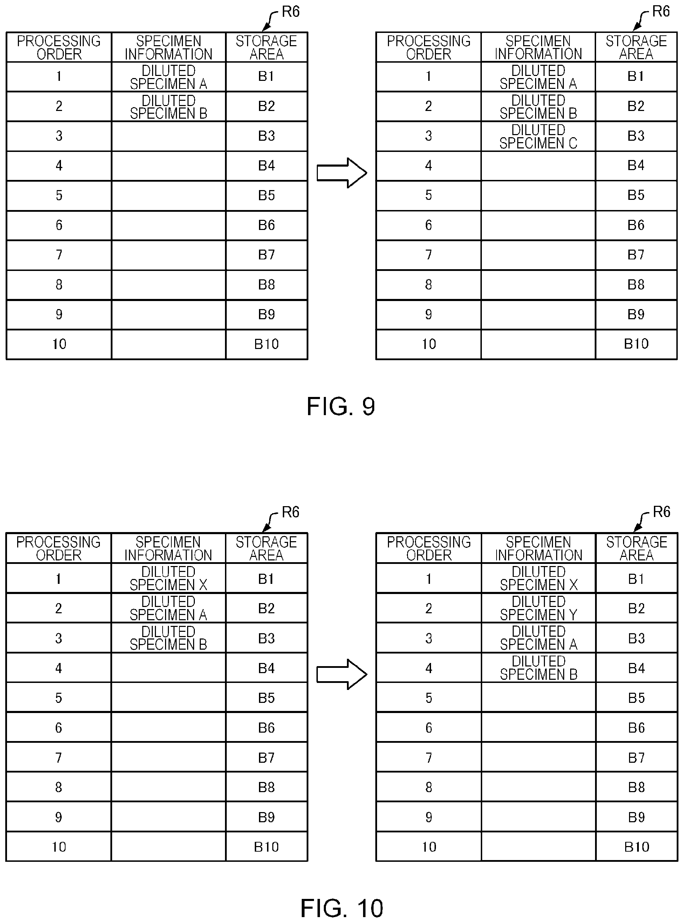

FIG. 9 and FIG. 10 illustrate a reaction-container expansion register R6 (expansion register R6).

The expansion register R6 manages an order in which the diluted-specimen dispensing probe 8 dispenses the diluted specimen into the reaction container 26. The expansion register R6 is controlled by the management unit 404.

For example, when the diluted specimen is located at the dispensable position P86 and becomes dispensable, that is, when the information on the diluted specimen is stored in the storage area A6 of the management register R3, the information on the diluted specimen stored in the storage area A6 is stored in the expansion register R6. At this time, a storage area in which information on a diluted specimen to be newly stored in the expansion register R6 is stored is determined based on the priority of the diluted specimen (original specimen).

The expansion register R6 has, in the example illustrated in FIG. 9, 10 storage areas from a storage area B1 to a storage area B10. In the storage area B1, the information on a diluted specimen to be dispensed into the reaction container 26 at the earliest is stored, in a storage area B2, the information on a diluted specimen to be dispensed subsequently to the diluted specimen in the storage area B1 is stored, and in a storage area B3, the information on a diluted specimen to be dispensed subsequently to the diluted specimen in the storage area B2 is stored. As described above, in the expansion register R6, the information on the diluted specimens is stored in the order of dispensing by the diluted-specimen dispensing probe 8.

In the example illustrated in FIG. 9, the information on a diluted specimen A is stored in the storage area B1, and the diluted specimen B is stored in the storage area B2. At this time, the information on a diluted specimen C is added to the expansion register R6. Here, the priority of the diluted specimen C is equal to or lower than the priority of the diluted specimen A and the diluted specimen B. In this case, the information on the diluted specimen C is stored in the storage area at the end of line of the storage areas in which the information on the diluted specimens have already been stored. That is, the information on the diluted specimen C is stored in the storage area B3.

In addition, in the example illustrated in FIG. 10, information on a diluted specimen X is stored in the storage area B1, the information on the diluted specimen A is stored in the storage area B2, and the information on the diluted specimen B is stored in the storage area B3. At this time, information on a diluted specimen Y is added to the expansion register R6. Here, priority of the diluted specimen Y is higher than the priorities of the diluted specimen A and the diluted specimen B and is lower than the priority of the diluted specimen X. In this case, the information on the diluted specimen Y is stored in a storage area located in the rear of the storage area in which the information on the diluted specimen X is stored and in front of the storage area in which the information on the diluted specimen A is stored. That is, the information on the diluted specimen X is stored in the storage area B1, the information on the diluted specimen Y is stored in the storage area B2, the information on the diluted specimen A is stored in the storage area B3, and the information on the diluted specimen B is stored in a storage area B4.

As described above, in the expansion register R6, the information on the diluted specimens is stored in the order from a higher priority or in the case in which the priority is equal, in the order of having been stored in the expansion register R6. In the expansion register R6, the information on the diluted specimen is aligned in the order of being dispensed by the diluted-specimen dispensing probe 8.

The information on the diluted specimen for which all the measurement items at the initial inspection have been measured is deleted from the expansion register R6. In this case, the information on the other diluted specimens stored in the expansion register R6 is moved up. Note that, the information on the diluted specimen remains in the management register R3, even if it is deleted from the expansion register R6.

Note that, when it is determined that re-inspection is needed from the measurement result of the diluted specimen at the initial inspection, the information on the diluted specimen determined to require re-inspection is stored in the expansion register R6 again. The information on the diluted specimen determined to require re-inspection is stored in the storage area in the expansion register R6 based on the priority of the diluted specimen.

The information on the diluted specimen for which all the measurement items of the re-inspection have been measured is deleted from the expansion register R6. In this case, the information on the other diluted specimens stored in the expansion register R6 is moved up.

### 1.6. Processing of management unit

### 1.6.1. First processing

The management unit 404 determines an order in which the diluted-specimen dispensing probe 8 dispenses the diluted specimen based on the priority of the diluted specimen which is dispensable into the reaction container 26, when the diluted specimen stored in the dilution container 23 becomes dispensable into the reaction container 26.

As described above, the request information of the specimen includes information on the measurement items and the priority of the specimen. The priority is expressed in three stages of high, medium, low, for example. The priority can be set arbitrarily. For example, a measurement priority of a QC (Quality Control) specimen for managing the quality of the measurement may be set to "high". Alternatively, the priority of the specimen for calibration may be set to "high". As a result, the QC specimen or the specimen for calibration can be measured rapidly.

After the diluted specimen A dispensed into the dilution container 23 becomes dispensable into the reaction container 26, if the diluted specimen B with the priority higher than that of the diluted specimen A becomes dispensable into the reaction container 26, the management unit 404 sets the order in which the diluted-specimen dispensing probe 8 dispenses the diluted specimen B before the diluted specimen A. That is, the management unit 404 changes the order in which the diluted-specimen dispensing probe 8 dispenses the diluted specimen with a higher priority before the diluted specimen with a lower priority.

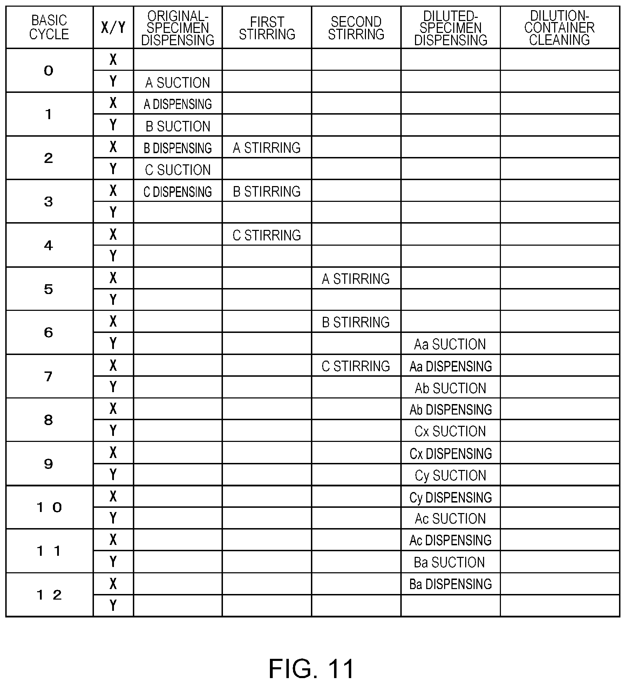

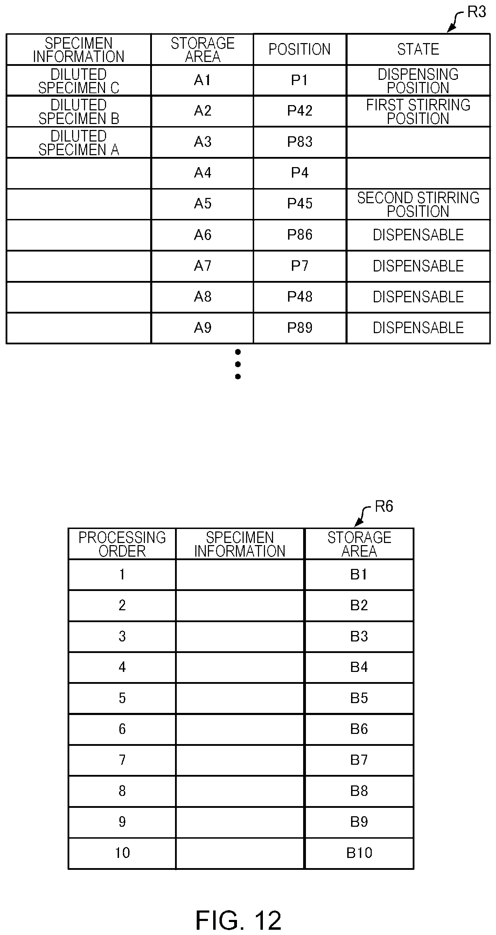

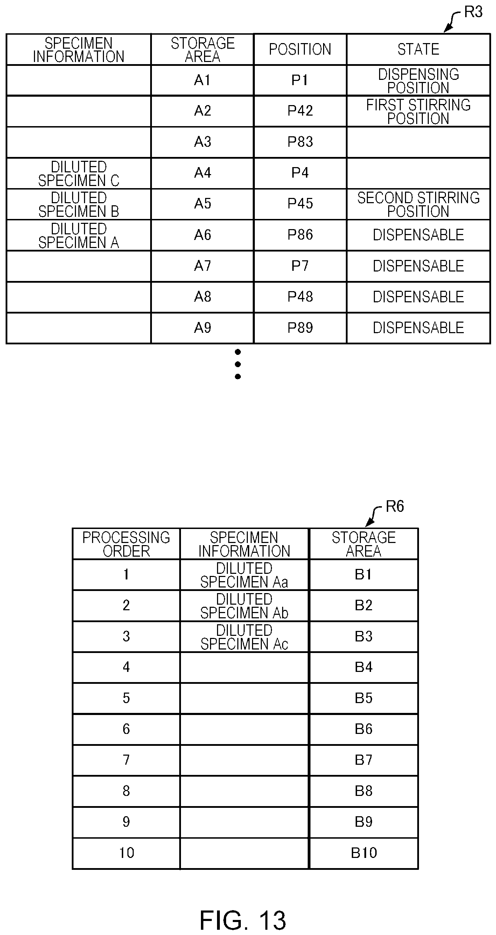

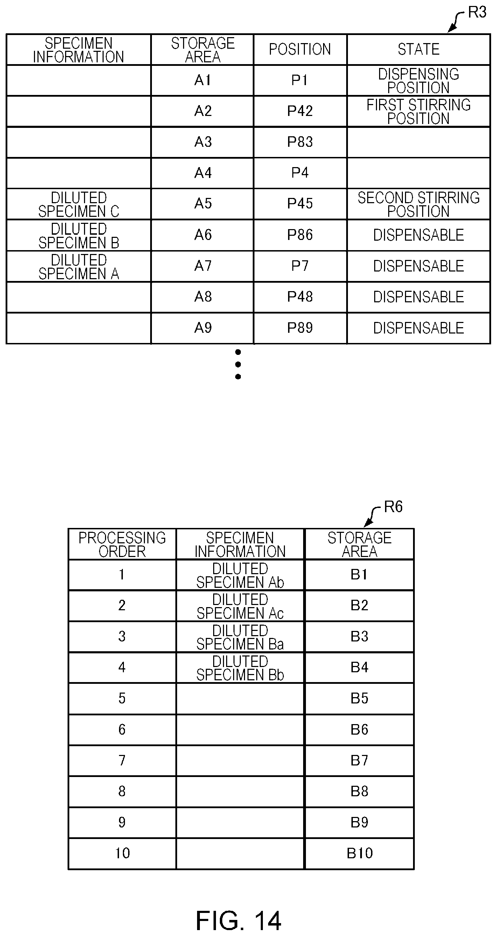

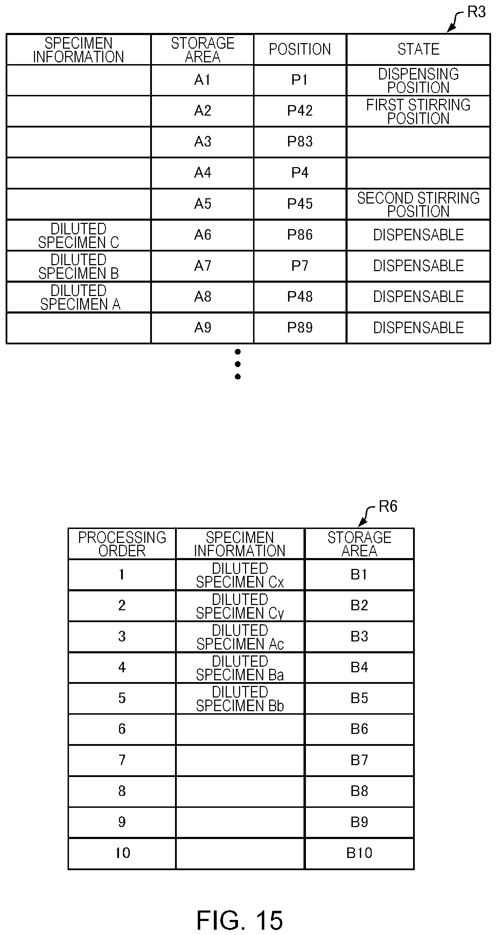

FIG. 11 illustrates the operation of the dilution turntable 3. FIG. 12 illustrates the management register R3 and the expansion register R6 in the third cycle. FIG. 13 illustrates the management register R3 and the expansion register R6 in the sixth cycle. FIG. 14 illustrates the management register R3 and the expansion register R6 in the seventh cycle. FIG. 15 illustrates the management register R3 and the expansion register R6 in the eighth cycle.

Here, a case in which the specimen A, the specimen B, and the specimen C are to be measured will be explained. Specifically, the specimen A has three measurement items a, b, c and 1 dilution condition, and one diluted specimen is generated. The specimen B has two measurement items a, b and 1 dilution condition, and one diluted specimen is generated. The specimen C has two measurement items x, y and 1 dilution condition, and one diluted specimen is generated. Note that the priorities of the measurement items a, b of the specimen A and the priorities of the measurement items a, b of the specimen B are the same. In addition, the priorities of the measurement items x, y of the specimen C are higher than the priorities of the measurement items a, b of the specimen A and the priorities of the measurement items a, b of the specimen B.

In the Y-cycle in the 0 cycle, the original-specimen dispensing probe 7 sucks the specimen A from the sample container 21. In the X-cycle in the first cycle, the original-specimen dispensing probe 7 dispenses the specimen A and the diluent into the dilution container 23 so as to generate the diluted specimen A. In the Y-cycle in the first cycle, the original-specimen dispensing probe 7 sucks the specimen B from the sample container 21.

In the X-cycle in the second cycle, the original-specimen dispensing probe 7 dispenses the specimen B and the diluent into the dilution container 23 and generates the diluted specimen B. In addition, in the X-cycle in the second cycle, the dilution/stirring mechanism 9 stirs the diluted specimen A by the first stirring bar. In the Y-cycle in the second cycle, the original-specimen dispensing probe 7 sucks the specimen C from the sample container 21.

In the X-cycle in the third cycle, the original-specimen dispensing probe 7 dispenses the specimen C and the diluent into the dilution container 23 and generates the diluted specimen C. In addition, in the X-cycle in the third cycle, the dilution/stirring mechanism 9 stirs the diluted specimen B by the first stirring bar.

As illustrated in FIG. 12, in the management register R3 in the third cycle, the information on the diluted specimen C is stored in the storage area A1, the information on the diluted specimen B is stored in the storage area A2, and the information on the diluted specimen A is stored in the storage area A3. In addition, since there is no dispensable diluted specimen on the dilution turntable 3, that is, since there is no information on the diluted specimen stored in the storage area A6 and after, no information on the diluted specimen is stored in the expansion register R6.

In the X-cycle in the fourth cycle, the dilution/stirring mechanism 9 stirs the diluted specimen C by the first stirring bar. In the X-cycle in the fifth cycle, the dilution/stirring mechanism 9 stirs the diluted specimen A by the second stirring bar.

In the X-cycle in the sixth cycle, the dilution/stirring mechanism 9 stirs the diluted specimen B by the second stirring bar. In the sixth cycle, the diluted specimen A becomes dispensable into the reaction container 26. Thus, as illustrated in FIG. 13, the management unit 404 stores the information on the diluted specimen A for the measurement item a (diluted specimen Aa) in the storage area B1 of the expansion register R6, stores the information on the diluted specimen A for the measurement item b (diluted specimen Ab) in the storage area B2, and stores the information on the diluted specimen A for the measurement item c (diluted specimen Ac). Note that, since the priorities of the measurement items a, b, c are the same, the management unit 404 stores the priorities of the diluted specimen Aa, the diluted specimen Ab, and the diluted specimen Ac in an arbitrary order.

In the Y-cycle in the sixth cycle, the diluted-specimen dispensing probe 8 sucks the diluted specimen Aa in accordance with the information on the diluted specimen Aa stored in the storage area B1 of the expansion register R6.

In the X-cycle in the seventh cycle, the dilution/stirring mechanism 9 stirs the diluted specimen C by the second stirring bar. In addition, in the X-cycle in the seventh cycle, the diluted-specimen dispensing probe 8 dispenses the diluted specimen Aa into the reaction container 26.

In the X-cycle in the seventh cycle, the diluted specimen Aa was dispensed into the reaction container 26. Thus, the management unit 404 deletes the information on the diluted specimen Aa from the expansion register R6 and moves up the information on the diluted specimen stored in each storage area. That is, the information on the diluted specimen Ab stored in the storage area B2 in the sixth cycle is stored in the storage area B1 in the seventh cycle. Similarly, the information on the specimen Ac stored in the storage area B3 in the sixth cycle is stored in the storage area B2 in the seventh cycle.

In addition, in the seventh cycle, the diluted specimen B becomes dispensable into the reaction container 26. Here, the measurement priority of each measurement item of the diluted specimen A is the same as the measurement priority of each measurement item of the diluted specimen B. When the priorities are the same, the management unit 404 executes storing in each storage area of the expansion register R6 in the order in which dispensing becomes possible. Thus, as illustrated in FIG. 14, the management unit 404 stores the information on the diluted specimen B for the measurement item a (diluted specimen Ba) in the storage area B3 and the information on the diluted specimen B for the measurement item b (diluted specimen Bb) in the storage area B4 of the expansion register R6.

As described above, the management unit 404 determines the order in which the diluted-specimen dispensing probe 8 dispenses the diluted specimen Ab, the diluted specimen Ac, the diluted specimen Ba, and the diluted specimen Bb based on the priorities of the diluted specimen Ab, the diluted specimen Ac, the diluted specimen Ba, and the diluted specimen Bb.

In the Y-cycle in the seventh cycle, the diluted-specimen dispensing probe 8 sucks the diluted specimen Ab in accordance with the information on the diluted specimen Ab stored in the storage area B1 on the expansion register R6.

In the X-cycle in the eighth cycle, the diluted-specimen dispensing probe 8 dispenses the diluted specimen Ab into the reaction container 26. The management unit 404 deletes the information on the diluted specimen Ab from the expansion register R6 and moves up the information on the diluted specimen stored in each storage area.

In the eighth cycle, the diluted specimen C becomes dispensable. Here, a measurement item x of the specimen C and a measurement item y of the specimen C have the highest priorities in the diluted specimen in each storage area of the expansion register R6. Thus, as illustrated in FIG. 15, the management unit 404 stores the information on the diluted specimen C for the measurement item x (diluted specimen Cx) in the storage area B1 and stores the information on the diluted specimen C for the measurement item y (diluted specimen Cy) in the storage area B2 of the expansion register R6. With that, the management unit 404 moves down the information on the diluted specimen stored in each storage area. Thus, in the storage area B3, the information on the diluted specimen Ac is stored, in the storage area B4, the information on the diluted specimen Ba is stored, and in the storage area B5, the information on the diluted specimen Bb is stored.

In the Y-cycle in the eighth cycle, the diluted-specimen dispensing probe 8 sucks the diluted specimen Cx in accordance with the information on the diluted specimen Cx stored in the storage area B1 of the expansion register R6.

In the X-cycle in the ninth cycle, the diluted-specimen dispensing probe 8 dispenses the diluted specimen Cx into the reaction container 26. In the Y-cycle in the ninth cycle, the diluted-specimen dispensing probe 8 sucks the diluted specimen Cy in accordance with the information on the diluted specimen Cy stored in the storage area B1 of the expansion register R6. The similar processing is executed for the 10 cycle and after.

### 1.6.2. Second processing

When the diluted specimen stored in the dilution container 23 is not dispensed by the diluted-specimen dispensing probe 8, even though the diluted specimen stored in the dilution container 23 has reached a predetermined position, the management unit 404 changes the priority of the diluted specimen from a first priority to a second priority higher than the first priority.

In the above-described first processing, when there are a large number of diluted specimens with high priorities, there is a problem that the measurement of the diluted specimen with a low priority is not performed.

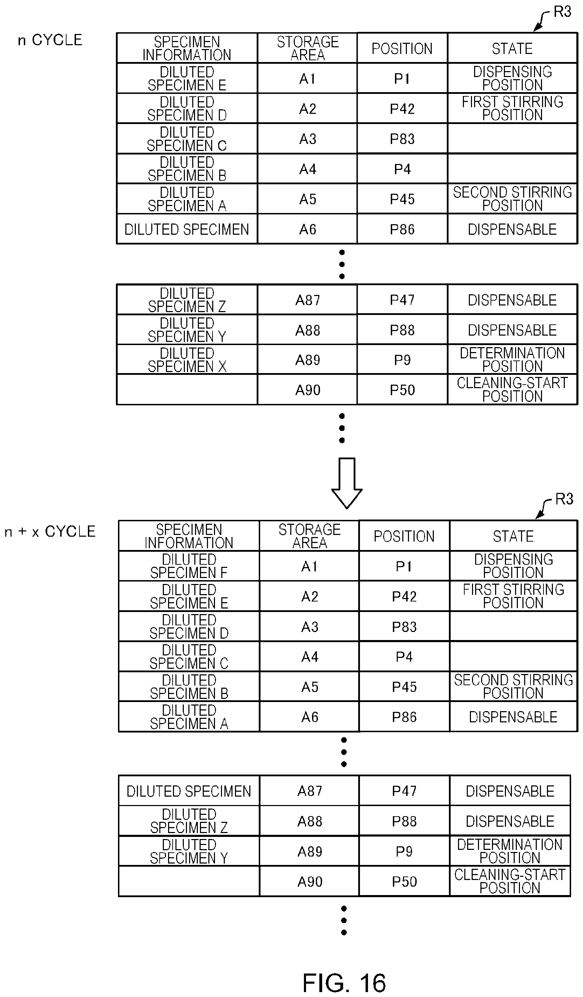

FIG. 16 illustrates an example of a state of the management register R3.

In the n cycle (n is an arbitrary natural number), when the diluted specimen X stored in the storage area A89 does not satisfy a rotation condition, the state of the management register R3 is not changed until the diluted specimen X satisfies the rotation condition. That is, the dilution turntable 3 does not rotate until the diluted specimen X satisfies the rotation condition in the n cycle and after.

In the n + x cycle (x is an arbitrary natural number), when the diluted specimen X satisfies the rotation condition, the data stored in each storage area of the management register R3 is shifted only by 1 step. As a result, since the storage area A1 becomes empty, the information on a subsequent diluted specimen F is stored. That is, in the n + x cycle, the diluted specimen F is dispensed into the dilution container 23 located at the dispensing position P1 on the dilution turntable 3.

As described above, regardless of the fact that a measurement request for the specimen F, which is the original specimen of the diluted specimen F, was made, when the diluted specimen X whose information is stored in the storage area A89 does not satisfy the rotation condition, processing at the dilution turntable 3 is stopped until the diluted specimen X satisfies the rotation condition.

Therefore, even though the diluted specimen stored in the dilution container 23 has reached the predetermined position, if the diluted specimen is not dispensed by the diluted-specimen dispensing probe 8, the management unit 404 changes the priority of the diluted specimen to the highest priority. Here, the case in which the diluted specimen is not dispensed by the diluted-specimen dispensing probe 8 includes a case in which the dispensing at the initial inspection has not been performed for the diluted specimen and a case in which re-inspection is needed and the dispensing of the re-inspection has not been performed for the diluted specimen. In addition, hereinafter, the diluted specimen which has not been dispensed by the diluted-specimen dispensing probe 8 shall be referred to simply as the undispensed diluted specimen.

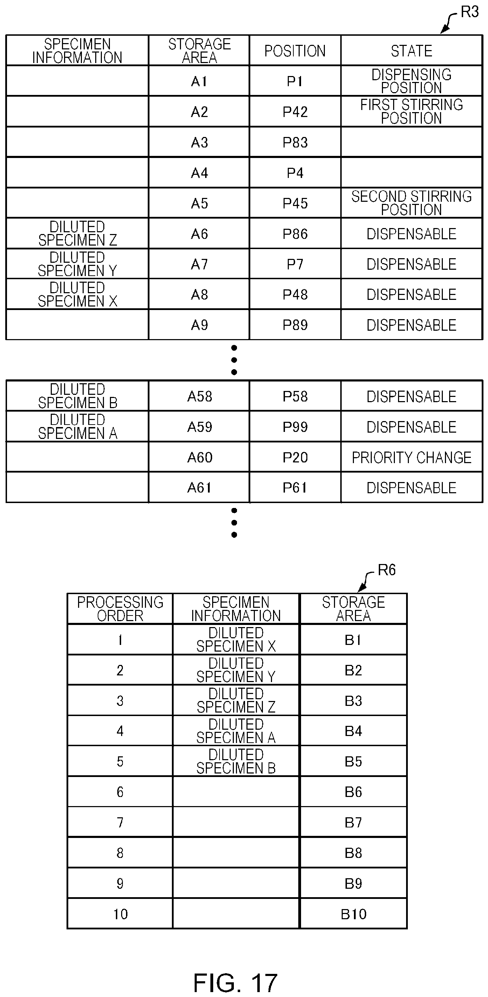

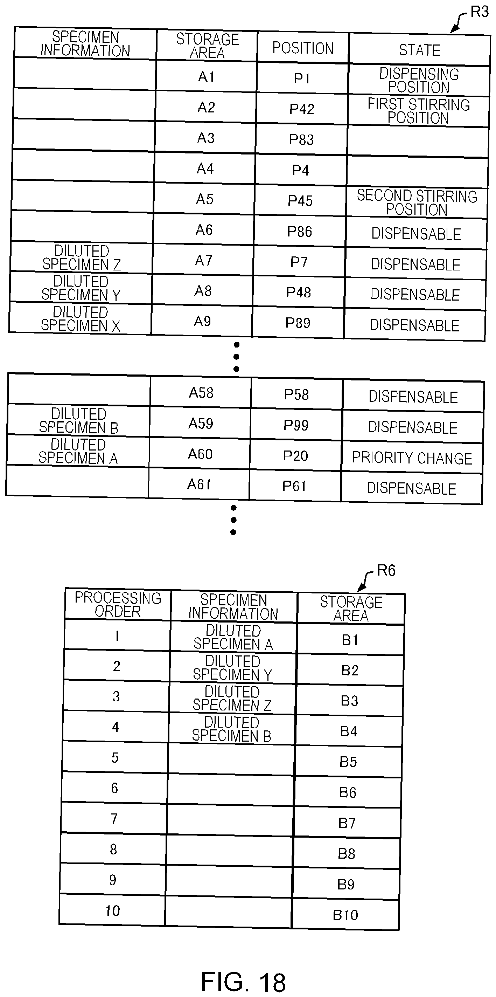

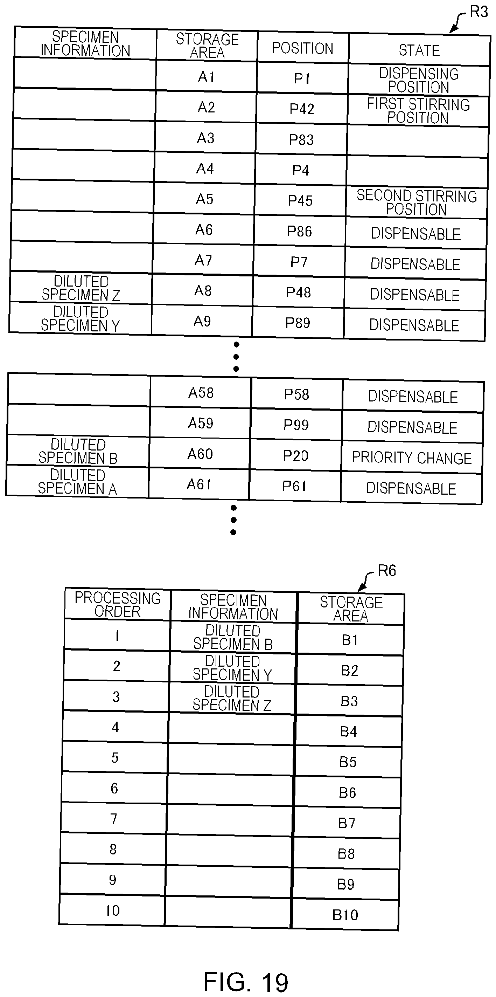

FIG. 17 illustrates a state of the management register R3 and the expansion register R6 in an m cycle (m is an arbitrary natural number), FIG. 18 illustrates a state of the management register R3 and the expansion register R6 in an m + 1 cycle, and FIG. 19 illustrates a state of the management register R3 and the expansion register R6 in an m + 2 cycle.

Even though the diluted specimen stored in the dilution container 23 has reached a priority change position P20, if the diluted specimen is not dispensed by the diluted-specimen dispensing probe 8, the management unit 404 changes the priority of the diluted specimen to the highest priority. The priority change position P20 corresponds to a storage area A60 of the management register R3.

As illustrated in FIG. 17, in the m cycle, in the management register R3, the information on a diluted specimen Z is stored in the storage area A6, the information on the diluted specimen Y is stored in a storage area A7, the information on the diluted specimen X is stored in a storage area A8, the information on the diluted specimen B is stored in a storage area A58, and the information on the diluted specimen A is stored in a storage area A59.

Here, dispensing for the initial inspection is not performed for the diluted specimen A, the diluted specimen B, the diluted specimen X, the diluted specimen Y, or the diluted specimen Z. In addition, the priorities of the diluted specimen X, the diluted specimen Y, and the diluted specimen Z are the same and higher than the priorities of the diluted specimen A and the diluted specimen B. Thus, in the expansion register R6, the diluted specimen X is stored in the storage area B1, the diluted specimen Y is stored in the storage area B2, the diluted specimen Z is stored in the storage area B3, the diluted specimen A is stored in the storage area B4, and the diluted specimen B is stored in the storage area B5.

As illustrated in FIG. 18, in the m + 1 cycle, in the management register R3, the information on the diluted specimen stored in each storage area is shifted only by 1 step. In addition, the diluted specimen X is dispensed into the reaction container 26 and is deleted from the expansion register R6.

Here, in the m + 1 cycle, the information on the diluted specimen A is stored in the storage area A60. That is, the dilution container 23 which stores the diluted specimen A reaches the priority change position P20 of the dilution turntable 3. At this time, the management unit 404 changes the priority of the diluted specimen A to the highest priority and stores the information on the diluted specimen A in the storage area B1 of the expansion register R6. Therefore, the diluted specimen A is dispensed into the reaction container 26 prior to the diluted specimen Y and the diluted specimen Z and is measured prior to them.

As illustrated in FIG. 19, in the m + 2 cycle, in the management register R3, the information on the diluted specimen stored in each storage area is shifted only by 1 step. In addition, the diluted specimen A is dispensed into the reaction container 26 and is deleted from the expansion register R6. In the m + 2 cycle, the information on the diluted specimen B is stored in the storage area A60. Thus, the management unit 404 changes the priority of the diluted specimen B to the highest priority and stores the information on the diluted specimen B in the storage area B1 of the expansion register R6. Therefore, the diluted specimen B is dispensed into the reaction container 26 prior to the diluted specimen Y and the diluted specimen Z and is measured prior to them.

Here, the priority change position was set to the position P20, but the priority change position can be set to an arbitrary position. In addition, here, the priority of the diluted specimen was changed to the highest priority at the priority change position P20, but it does not have to be the highest priority as long as the priority is changed to high.

### 1.6.3. Third processing

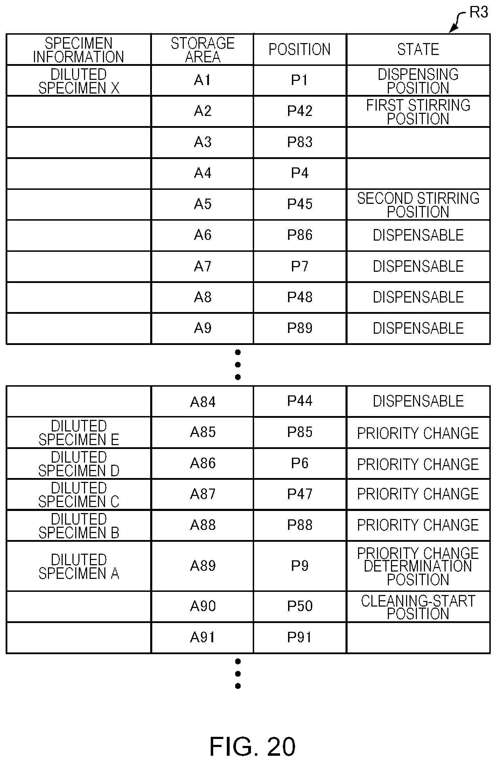

FIG. 20 illustrates an example of a state of the management register R3.

When the diluted specimens are disposed from the dispensing position P1 to the second stirring position P45 one position before the dispensable position P86, the management unit 404 changes the priorities of the diluted specimens disposed from a first position P85 to the second position (determination position) P9 from the first priority to the second priority higher than the first priority.

When the diluted specimen X dispensed at the dispensing position P1 of the dilution turntable 3 reaches the dispensable position P86 via the first stirring position P42, the position P83, the position P4, the second stirring position P45, it becomes dispensable into the reaction container 26. That is, the diluted specimen X at the dispensing position P1 becomes dispensable into the reaction container 26 via the five positions. Therefore, in the management register R3, the information on the diluted specimen X stored in the storage area A1 is shifted only by 5 steps and then, stored in the storage area A6, and the diluted specimen X becomes dispensable.

The diluted specimen located at the position P85 of the dilution turntable 3 reaches the cleaning-start position P50 via a position P6, a position P47, the position P88, the determination position P9. Here, it is assumed that the position P85 of the dilution turntable 3 is the first position P85, and the position P9 one before reaching the cleaning-start position P50 is the second position P9. The diluted specimen reaches the cleaning-start position P50 subsequent to the second position P9. Therefore, the information on the diluted specimen stored in the storage area A85 corresponding to the first position P85 is stored in the storage area A90 by being shifted only by 5 steps.

At this time, when there is an undispensed diluted specimen from the first position P85 to the second position P9, it is determined at the determination position P9 that the rotation condition is not satisfied, and there is a possibility that the dilution turntable 3 does not rotate before the diluted specimen at the dispensing position P1 reaches the dispensable position P86. As a result, it takes time until the diluted specimen at the dispensing position P1 is brought into a dispensable state.

For example, in FIG. 20, when the diluted specimen A located at the second position P9 does not satisfy the rotation condition, the dilution turntable 3 does not rotate until the diluted specimen A satisfies the rotation condition. Thus, in the dilution turntable 3, processing of the diluted specimen X does not proceed, either. The diluted specimen X cannot reach the dispensable position P86 until all the diluted specimen A, the diluted specimen B, the diluted specimen C, a diluted specimen D, and a diluted specimen E satisfy the rotation condition.

Therefore, when the diluted specimens are disposed from the dispensing position P1 to the second stirring position P45, the management unit 404 changes the priorities of the diluted specimens disposed from the first position P85 to the second position P9 to the highest priority. That is, the management unit 404 changes the priorities of the diluted specimen A, the diluted specimen B, the diluted specimen C, the diluted specimen D, and the diluted specimen E to the highest priority. As a result, a possibility of generation of waiting time until the diluted specimen X reaches from the dispensing position P1 to the dispensable position P86 can be reduced, and the diluted specimen X can be dispensed into the reaction container 26 rapidly.

Note that the priority of the diluted specimen is changed to the highest priority, here, but it does not have to be the highest priority as long as the priority is changed to a higher one.

### 1.6.4. Flow of processing by management unit

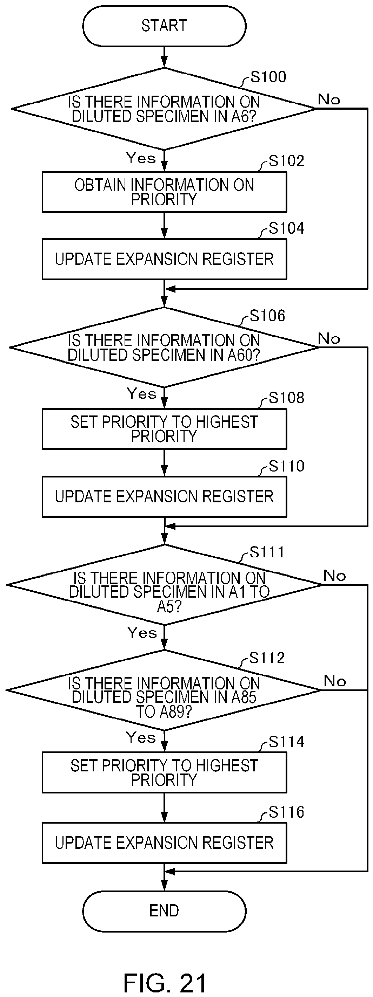

FIG. 21 is a flowchart illustrating an example of processing by the management unit 404. Here, processing by the management unit 404 for 1 cycle will be explained.

The management unit 404 determines whether or not the information on the diluted specimen is stored in the storage area A6 of the management register R3 (Step S100). That is, the management unit 404 determines whether or not the dilution container 23 in which the diluted specimen is stored is disposed at the dispensable position P86.

When the information on the diluted specimen is stored in the storage area A6 (Yes at Step S100), the management unit 404 obtains the information on the priority of the diluted specimen in the storage area A6 (Step S102). The information on the priority of the diluted specimen is included in the request information. The management unit 404 obtains the information on the priority from the request information stored in the storage unit 430.

The management unit 404 determines an order in which the diluted-specimen dispensing probe 8 dispenses these diluted specimens based on the priority of the diluted specimen in each storage area of the expansion register R6 and the priority of the diluted specimen in the storage area A6 and updates the expansion register R6 (Step S104).

The management unit 404 obtains the information on the priority of the diluted specimen in each storage area of the expansion register R6 before the update from the request information stored in the storage unit 430. The management unit 404 compares the priority of the diluted specimen in each storage area of the expansion register R6 and the priority of the diluted specimen to be newly added to the expansion register R6 and updates the expansion register R6 so that these diluted specimens are aligned in the order from the higher priority.

The above-described processing at Step S100, Step S102, and Step S104 corresponds to the above-described first processing.

When the information on the diluted specimen is not stored in the storage area A6 (No at Step S100) or after the expansion register R6 is updated (after Step S104), the management unit 404 determines whether or not the information on the undispensed diluted specimen is stored in the storage area A60 of the management register R3 (Step S106). That is, the management unit 404 determines whether or not the dilution container 23 in which the undispensed diluted specimen is stored is disposed at the priority change position P20.

When the information on the undispensed diluted specimen is stored in the storage area A60 (Yes at Step S106), the management unit 404 changes the priority of the diluted specimen in the storage area A60 to the highest priority (Step S108). The management unit 404 changes a storage spot in the expansion register R6 of the information on the diluted specimen in the storage area A60 in accordance with the updated priority and updates the expansion register R6 (Step S110). The management unit 404 changes the storage spot in the expansion register R6 of the information on the diluted specimen stored in the storage area A60 to the storage area B1 and moves down the information on the diluted specimens stored in the other storage areas. The update processing of the expansion register R6 at Step S110 may be executed similarly to the update processing of the expansion register R6 at Step S104, for example.

The processing in the above-described Step S106, Step S108, and Step S110 correspond to the above-described second processing.

When the information on the undispensed diluted specimen is not stored in the storage area A60 (No at Step S106) or after the expansion register R6 is updated (after Step S110), the management unit 404 determines whether or not the information on the diluted specimen is stored in a range from the storage area A1 to the storage area A5 of the management register R3 (Step S111). When the information on the diluted specimen is stored in the range from the storage area A1 to the storage area A5 (Yes at Step S111), the management unit 404 determines whether or not the information on the undispensed diluted specimen is stored in a range from the storage area A85 to the storage area A89 of the management register R3 (Step S112). That is, the management unit 404 determines whether or not the dilution container 23 in which the undispensed diluted specimen is stored is disposed from the first position P85 to the second position P9.

When the information on the undispensed diluted specimen is stored in the range from the storage area A85 to the storage area A89 (Yes at Step S112), the management unit 404 specifies the diluted specimen from the information on the undispensed diluted specimen stored in the range from the storage area A85 to the storage area A89 and changes the priority thereof to the highest priority (Step S114). The management unit 404 changes the storage spots in the expansion register R6 of the information on the diluted specimens stored in the range from the storage area A85 to the storage area A89 in accordance with the changed priority and updates the expansion register R6 (Step S116). The management unit 404 changes the storage spots in the expansion register R6 of the information on the diluted specimens stored in the range from the storage area A85 to the storage area A89 so as to be aligned in the order from the storage area B1 and moves down the information on the diluted specimens stored in the other storage areas only by the number of storage areas corresponding to the number of pieces of information added. The update processing of the expansion register R6 at Step S116 may be executed similarly to the update processing of the expansion register R6 at Step S104, for example.

When the information on the diluted specimen is not stored in the range from the storage area A1 to the storage area A5 (No at Step S111), when the information on the diluted specimen is not stored in the range from the storage area A85 to the storage area A89 (No at Step S112), or after the expansion register R6 is updated (after Step S116), the management unit 404 ends the processing.

The processing at the above-described Step S111, Step S112, Step S114, and Step S116 correspond to the above-described third processing.

The management unit 404 repeats the processing with the above-described processing as 1 cycle. Note that the order of each processing illustrated in FIG. 21 is not particularly limited but the order of the processing may be switched. In addition, in the example illustrated in FIG. 21, all the first processing, the second processing, and the third processing were executed, but at least one of the first processing, the second processing, and the third processing may be executed.

### 1.7. Effects

The automated analyzer 100 includes the dilution turntable 3 for holding a plurality of the dilution containers 23, the original-specimen dispensing probe 7 for generating a diluted specimen by dispensing a specimen and a diluent into the dilution container 23, the dilution/stirring mechanism 9 for stirring the diluted specimen stored in the dilution container 23, the reaction turntable 6 for holding a plurality of the reaction containers 26, the diluted-specimen dispensing probe 8 for sucking the diluted specimen from the dilution container 23 and dispensing it into the reaction container 26, and the multiwavelength photometer 16 for measuring the diluted specimen stored in the reaction container 26. In addition, the automated analyzer 100 includes the management unit 404 for determining the order in which the diluted-specimen dispensing probe 8 dispenses the diluted specimen based on the priority of the diluted specimen, when the diluted specimen stored in the dilution container 23 becomes dispensable into the reaction container 26, and a control unit 402 for causing the diluted-specimen dispensing probe 8 to dispense the diluted specimen in accordance with the order determined by the management unit 404.

As described above, in the automated analyzer 100, the management unit 404 determines the order in which the diluted-specimen dispensing probe 8 dispenses the diluted specimen based on the priority of the diluted specimen, when the diluted specimen stored in the dilution container 23 becomes dispensable into the reaction container 26. Thus, in the automated analyzer 100, even when the specimen with a lower priority is dispensed into the dilution container 23 prior to the specimen with a higher priority, the specimen with the higher priority can be dispensed into the reaction container 26 prior to the specimen with the lower priority. Therefore, in the automated analyzer 100, the specimen with the higher priority can be processed rapidly.

For example, by setting the priority of a QC specimen or a specimen for calibration higher, the QC specimen or the specimen for calibration can be measured rapidly.

In the automated analyzer 100, the diluted specimen stored in the dilution container 23 becomes dispensable into the reaction container 26 after being stirred by the dilution/stirring mechanism 9.

In the automated analyzer 100, after the diluted specimen A (one example of a first pre-treated specimen) dispensed into the dilution container 23 becomes dispensable into the reaction container 26, when the diluted specimen X (one example of a second pre-treated specimen) with the priority higher than that of the diluted specimen A becomes dispensable into the reaction container 26, the management unit 404 sets the order of the diluted specimen X before the order of the diluted specimen A. Therefore, in the automated analyzer 100, even when the diluted specimen A is dispensed into the dilution container 23 prior to the diluted specimen X, the diluted specimen X can be dispensed into the reaction container 26 prior to the diluted specimen A.

In the automated analyzer 100, when the diluted specimen A is not dispensed by the diluted-specimen dispensing probe 8 even though the diluted specimen A stored in the dilution container 23 reaches the predetermined position (priority change position P20), the management unit 404 changes the priority of the diluted specimen A from the first priority to the second priority higher than the first priority. Thus, in the automated analyzer 100, even when there are a large number of diluted specimens with high priority, a possibility of processing stop for a long time can be reduced.

For example, when an undispensed diluted specimen is at the determination position P9, and this diluted specimen does not satisfy the rotation condition, the processing is stopped for a long time until the rotation condition is satisfied. In the automated analyzer 100, since the priority of the diluted specimen is high at the priority change position P20, a possibility that the undispensed diluted specimen reaches the determination position P9 can be reduced. Therefore, even in the case in which there are a large number of diluted specimens with high priority, the possibility that the processing is stopped for a long time can be reduced.

In the automated analyzer 100, in the dilution turntable 3, the dilution container 23 reaches the dispensable position P86 where the diluted specimen can be dispensed into the reaction container 26 from the dispensing position P1 where the diluted specimen is dispensed into the dilution container 23 via a predetermined number of positions. In addition, in the dilution turntable 3, the dilution container 23 reaches the cleaning-start position P50 where the cleaning of the dilution container 23 is started from the first position P85 via the predetermined number of positions. The dilution container 23 reaches the cleaning-start position P50 subsequent to the second position P9. When the diluted specimen is disposed from the dispensing position P1 to the second stirring position P45 one before the dispensable position P86, the management unit 404 changes the priority of the diluted specimen disposed from the first position P85 to the second position P9 from the first priority to the second priority higher than the first priority. Thus, in the automated analyzer 100, when the diluted specimen is dispensed at the dispensing position P1, the diluted specimen can be made dispensable into the reaction container 26 rapidly.

In the control method of the automated analyzer 100, when the diluted specimen stored in the dilution container 23 becomes dispensable into the reaction container 26, a process of determining an order in which the diluted-specimen dispensing probe 8 dispenses the diluted specimen based on the priority of the diluted specimen and a process of causing the diluted-specimen dispensing probe 8 to dispense the diluted specimen in accordance with the determined order are included. Thus, in the control method of the automated analyzer 100, even when the specimen with lower priority is dispensed into the dilution container 23 prior to the specimen with higher priority, the specimen with the higher priority can be dispensed into the reaction container 26 prior to the specimen with the lower priority. Therefore, in the control method of the automated analyzer 100, the specimen with the higher priority can be processed rapidly.

### 1.8. Variation

In the second processing in the above-described first embodiment, even though the diluted specimen stored in the dilution container 23 reaches the priority change position P20, if the diluted specimen has not been dispensed by the diluted-specimen dispensing probe 8, the management unit 404 changed the priority of the diluted specimen to the highest priority. On the other hand, even though predetermined cycles have passed (even though 60 cycles have passed, for example), if the diluted specimen stored in the dilution container 23 has not been dispensed by the diluted-specimen dispensing probe 8, the management unit 404 may change the priority of the diluted specimen to the highest priority. In addition, even though predetermined time has passed, if the diluted specimen stored in the dilution container 23 has not been dispensed by the diluted-specimen dispensing probe 8, the management unit 404 may change the priority of the diluted specimen to the highest priority. Note that, here, the priority of the diluted specimen was changed to the highest priority, but it does not have to be the highest priority as long as the priority is changed to a higher one.

### 2. Second embodiment

### 2.1. Configuration of Automated Analyzer

Subsequently, an automated analyzer according to the second embodiment will be explained. The automated analyzer according to the second embodiment is similar to the configuration of the automated analyzer 100 according to the first embodiment, and the explanation thereof will be omitted.

### 2.2. Operation

In such a state that measurement of a specimen is continuously requested, in order to wait for the determination on whether or not the rotation condition is satisfied at the determination position P9, a large number of diluted specimens are held on the dilution turntable 3. In this state, at the dispensing position P1, even if the diluted specimen with the highest priority is dispensed into the dilution container 23, it takes considerable time for the diluted specimen to become dispensable into the reaction container 26.

Thus, the control unit 402 makes the position P88 to the position P9 on the dilution turntable 3 as spare cells and use them for specimens for emergency measurement. When there is a diluted specimen requiring emergency measurement from the dispensing position P1 to the second stirring position P45, the control unit 402 uses the spare cells from the position P88 to the position P9. Note that, when there is no diluted specimen requiring emergency measurement from the dispensing position P1 to the second stirring position P45, the spare cells from the position P88 to the position P9 are not used. In this case, the diluted specimen during measurement stands by within a range from the position P86 to the position P91.

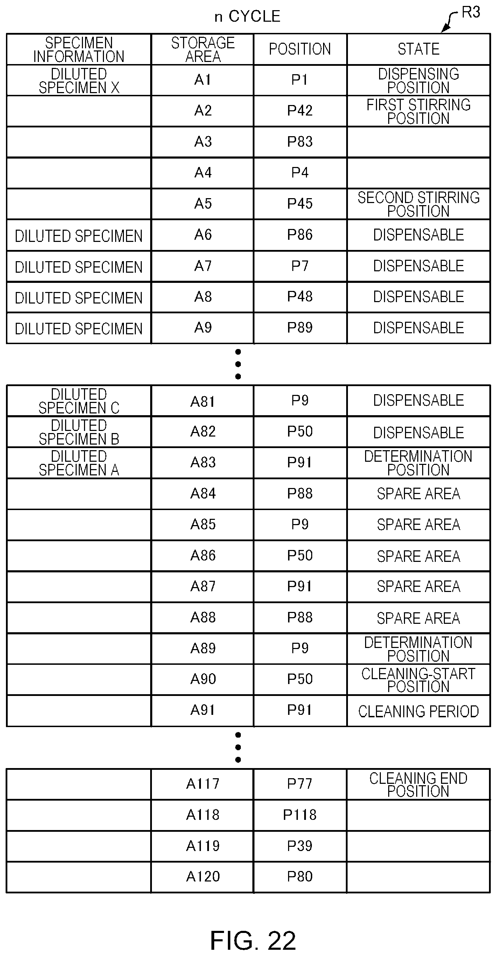

FIG. 22 illustrates a state of the management register R3 in the n cycle.

As illustrated in FIG. 22, in the n cycle, the information on the diluted specimen X is stored in the storage area A1, and the information on the diluted specimen A is stored in the storage area A83.

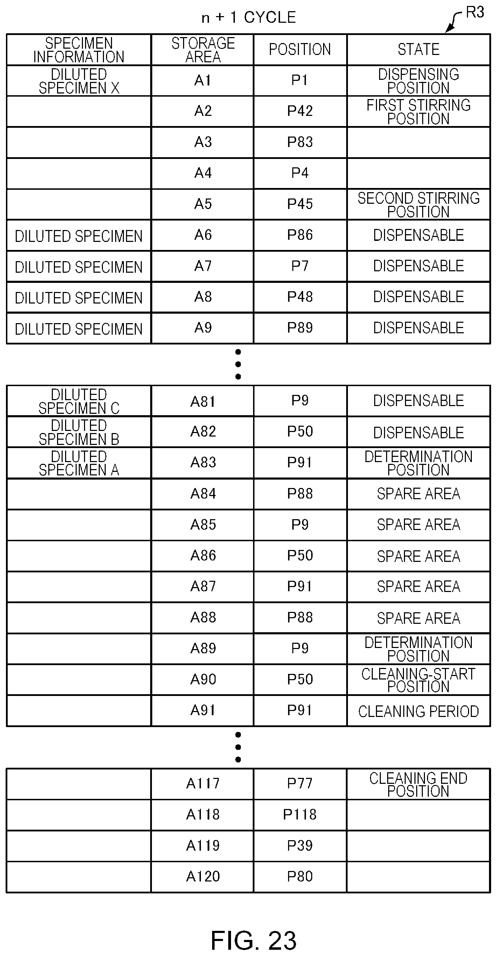

FIG. 23 illustrates a state of the management register R3 in the n + 1 cycle. Note that, in the example illustrated in FIG. 23, the priority of the diluted specimen X is the same as that of the diluted specimen A.

As illustrated in FIG. 23, when the priority of the diluted specimen X is the same as that of the diluted specimen A, the information on the diluted specimen stored in each storage area of the management register R3 is not shifted. That is, the information on the diluted specimen X remains to be stored in the storage area A1.

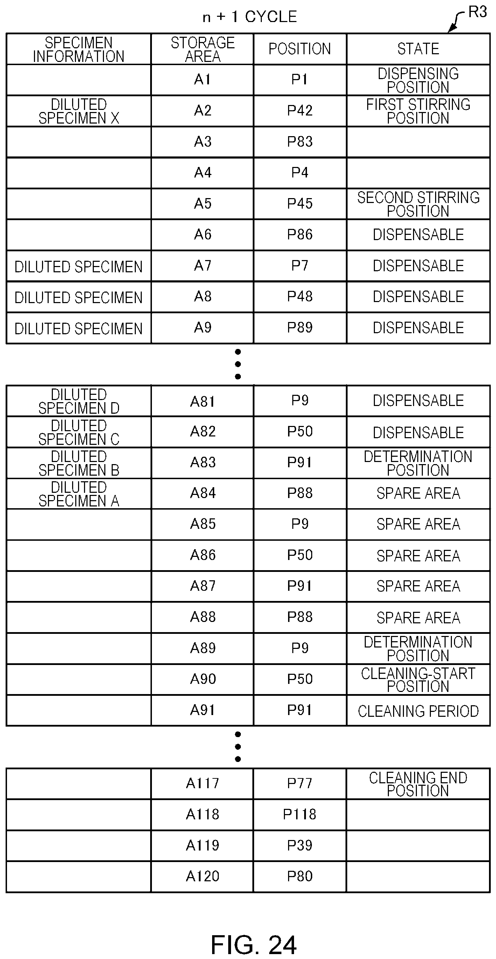

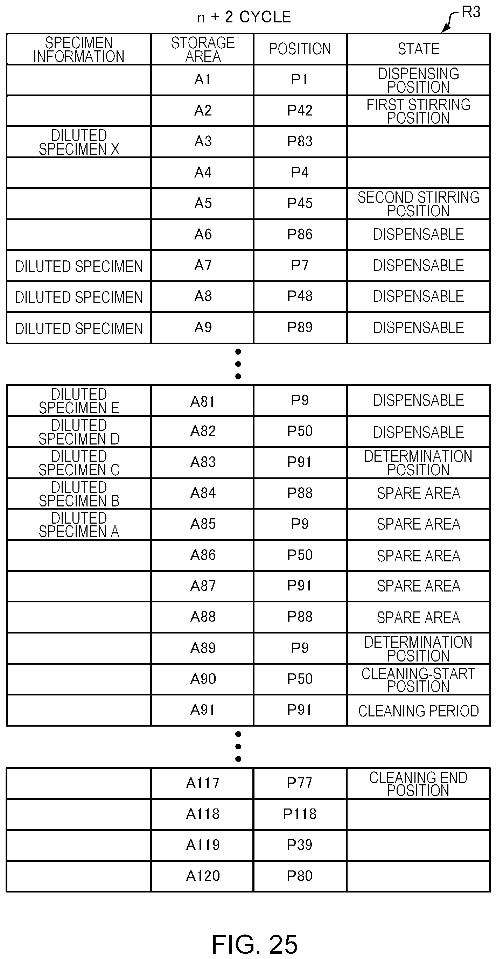

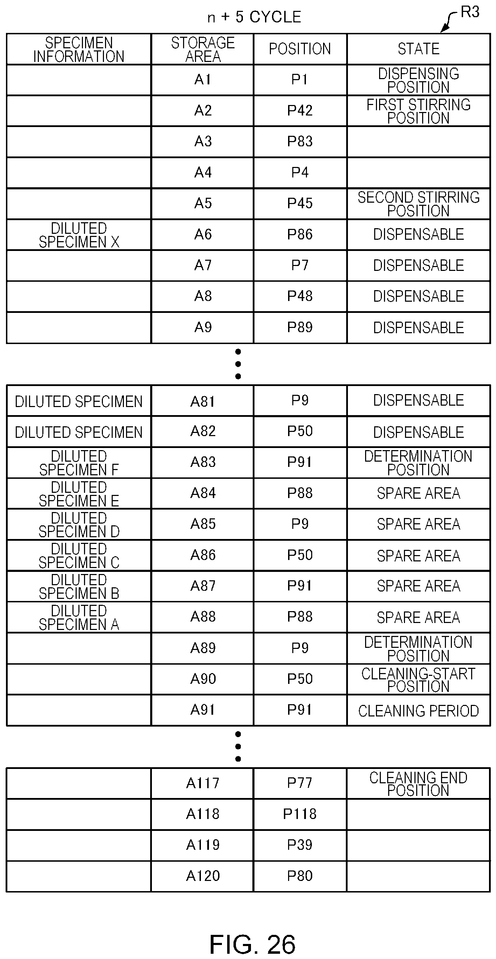

FIG. 24 illustrates a state of the management register R3 in the n + 1 cycle. FIG. 25 illustrates a state of the management register R3 in the n + 2 cycle. FIG. 26 illustrates a state of the management register R3 in the n + 5 cycle. In the examples illustrated in FIG. 24, FIG. 25, and FIG. 26, the diluted specimen X has the highest priority.

As illustrated in FIG. 22, in the n cycle, the information on the diluted specimen X is stored in the storage area A1, and the information on the diluted specimen A is stored in the storage area A83. The diluted specimen A is undispensed in the first inspection. At this time, when the diluted specimen X has the highest priority in the diluted specimen in each storage area of the management register R3, as illustrated in FIG. 24, in the n + 1 cycle, the information on the diluted specimen stored in each storage area of the management register R3 is shifted only by 1 step. That is, the information on the diluted specimen A is stored in the storage area A84, which is a spare area, and the information on the diluted specimen X is stored in the storage area A2. The spare areas correspond to spare cells.

As illustrated in FIG. 25, similarly in the n + 2 cycle, the information on the diluted specimen stored in each storage area of the management register R3 is shifted only by 1 step. This is repeated, and in the n + 5 cycle illustrated in FIG. 26, the information on the diluted specimen X is stored in the storage area A6. That is, in the n + 5 cycle, the diluted specimen X is located at the dispensable position P86 and becomes dispensable. Therefore, the diluted specimen X can be measured rapidly.

When the information on the diluted specimen X is stored in the storage area A6, the control unit 402 does not cause the state of the management register R3 to be changed. That is, when the diluted specimen X is located at the dispensable position P86, the rotation of the dilution turntable 3 is stopped.

### 3. Third embodiment

### 3.1. Configuration of Automated Analyzer

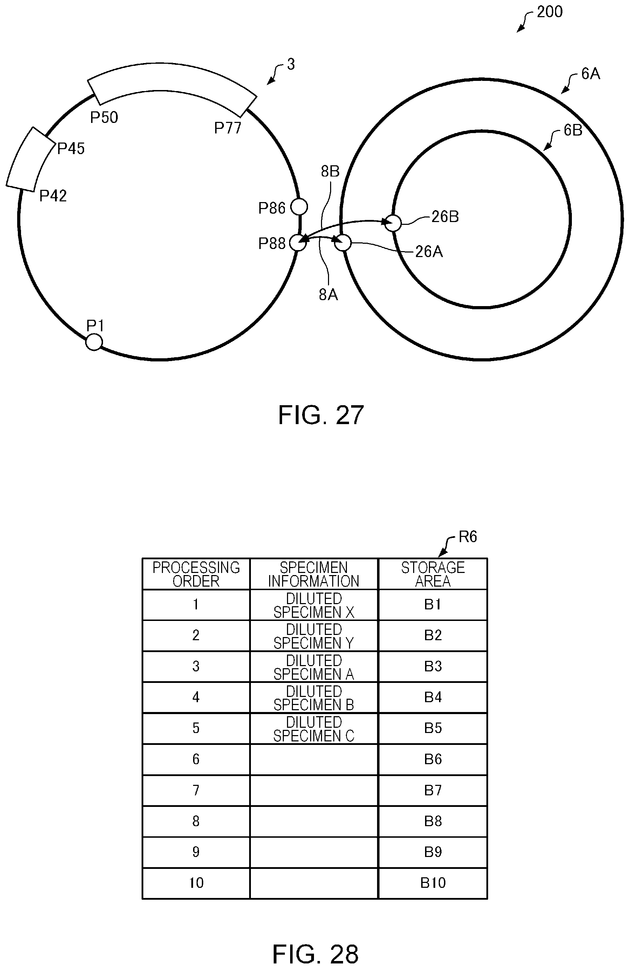

Subsequently, an automated analyzer according to the third embodiment will be explained with reference to the drawings. FIG. 27 is a diagram illustrating an example of a configuration of an automated analyzer 200 according to the third embodiment. Hereinafter, in the automated analyzer 200 according to the third embodiment, the same signs are given to the members having the similar functions as the constituent members of the automated analyzer 100 according to the first embodiment, and detailed explanation thereof will be omitted.

In the above-described automated analyzer 100, as illustrated in FIG. 4, the reaction turntable 6 has 1 line. On the other hand, the automated analyzer 200 has, as illustrated in FIG. 27, two lines (a first line 6A and a second line 6B). In addition, the automated analyzer 200 has a first diluted-specimen dispensing probe 8A for dispensing a diluted specimen into a plurality of first reaction containers 26A held by the first line 6A and a second diluted-specimen dispensing probe 8B for dispensing the diluted specimen into a plurality of second reaction containers 26B held by the second line 6B. In the first line 6A and the second line 6B, measurement of the diluted specimen is performed by the multiwavelength photometer 16, respectively.

In the Y-cycle in the basic cycle, sucking of the diluted specimen by the first diluted-specimen dispensing probe 8A and the sucking of the diluted specimen by the second diluted-specimen dispensing probe 8B are performed. In addition, in the X-cycle in the basic cycle, the dispensing of the diluted specimen into the first reaction container 26A by the first diluted-specimen dispensing probe 8A and the dispensing of the diluted specimen into the second reaction container 26B by the second diluted-specimen dispensing probe 8B are performed. The other operations are similar to the example in the automated analyzer 100, and the explanation will be omitted.

### 3.2. Operation of Automated Analyzer

FIG. 28 illustrates an example of a state of the expansion register R6. Note that the diluted specimen X and the diluted specimen Y have "high" priorities, the diluted specimen A and the diluted specimen B have "medium" priorities, and the diluted specimen C has a "low" priority.

The control unit 402 causes the first diluted-specimen dispensing probe 8A to dispense the diluted specimen A, the diluted specimen B, and the diluted specimen C with the priorities lower than "high". That is, the diluted specimen A, the diluted specimen B, and the diluted specimen C are dispensed into the first reaction container 26A of the first line 6A. In addition, the control unit 402 causes the second diluted-specimen dispensing probe 8B to dispense the diluted specimen X and the diluted specimen Y. That is, the diluted specimen X and the diluted specimen Y are dispensed into the second reaction container 26B of the second line 6B. As described above, in the automated analyzer 200, the second line 6B is used as a dedicated line for the diluted specimen with a high priority. Therefore, in the automated analyzer 200, the diluted specimen with a high priority can be measured rapidly.

### 4. Variation

Note that the invention is not limited to the above-described embodiments, but various variations can be made within the scope of the invention.

### 4.1. First Variation

In the above-described first, second and third embodiments, a case in which a diluent such as physiological saline is used as a pre-treatment liquid was explained, but the pre-treatment liquid is not limited to a diluent. For example, at measurement of hemoglobin A1c (HbA1c), a hemolytic agent may be used as the per-treatment liquid.

### 4.2. Second Variation

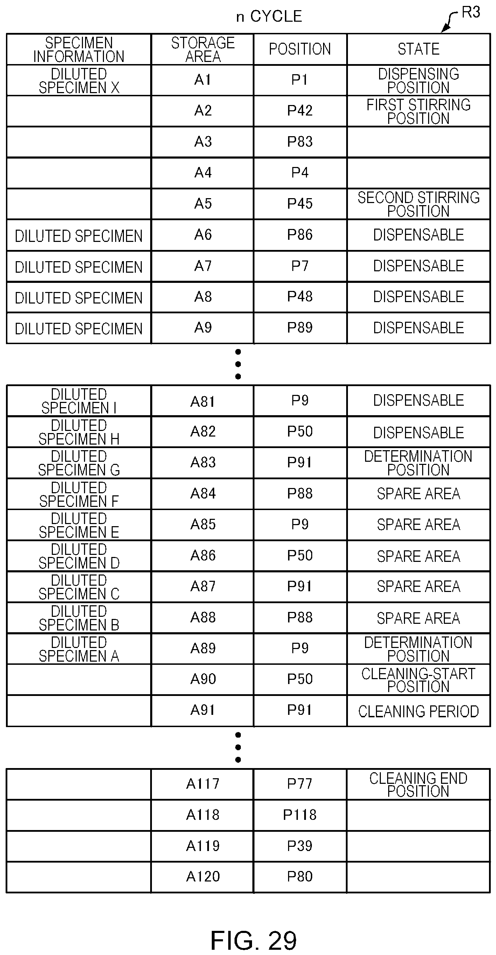

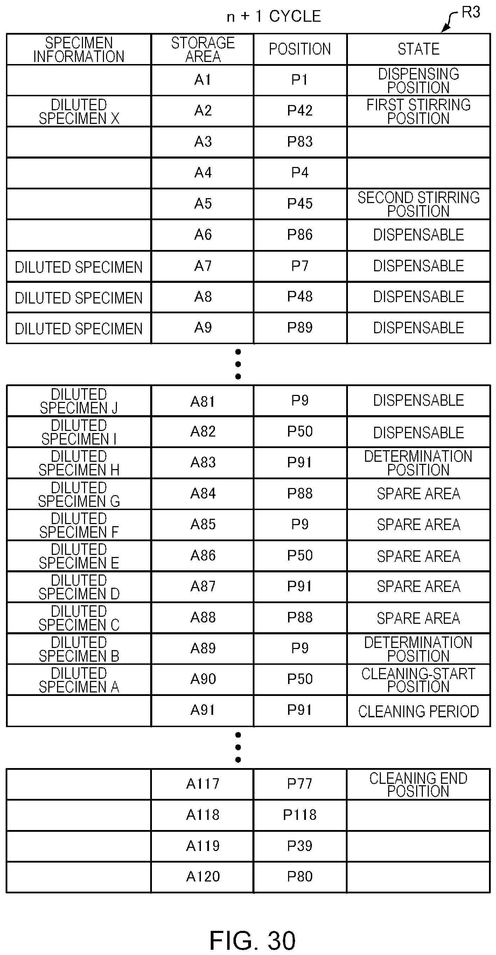

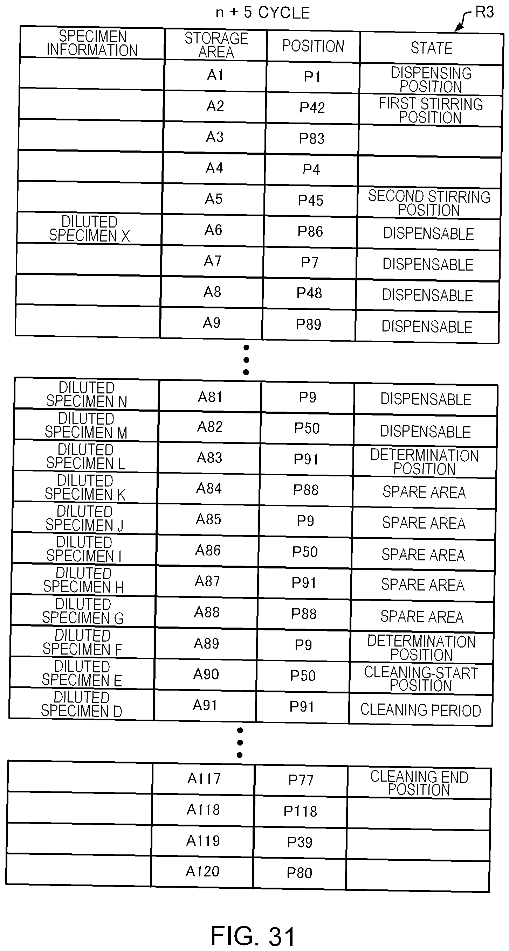

FIG. 29 illustrates a state of the management register R3 in the n cycle. FIG. 30 illustrates a state of the management register R3 in the n + 1 cycle. FIG. 31 illustrates a state of the management register R3 in the n + 5 cycle. In the examples illustrated in FIG. 29, FIG. 30, and FIG. 31, the diluted specimen X has the highest priority.

When the diluted specimen X is stored in the range from the storage area A1 to the storage area A5, the control unit 402 shifts the information on the diluted specimen stored in each storage area only by 1 step. When the diluted specimen X is not stored in the range from the storage area A1 to the storage area A5, the control unit 402 does not cause the information on the diluted specimen stored in each storage area to be shifted only by 1 step.

As illustrated in FIG. 29, the information on the diluted specimen X stored in the storage area A1 in the n cycle is stored in the storage area A6 in the n + 5 cycle. That is, the diluted specimen X at the dispensing position P1 in the n cycle is located at the dispensable position P86 in the n + 5 cycle. Therefore, the diluted specimen X can be dispensed rapidly.

At this time, the diluted specimen A, the diluted specimen B, the diluted specimen C, the diluted specimen D, and the diluted specimen E reach the cleaning-start position P50, they are cleaned and cannot be used for the re-inspection. In the case in which they cannot be used for the re-inspection as above, it is notified to a user by an alarm or the like.

Note that the above-described embodiments and variations are just examples and the invention is not limited thereto. The embodiments and variations can be combined as appropriate, for example.

The invention is not limited to the above-described embodiments, and various modifications can be made. For example, the invention includes configurations that are substantially the same as the configurations described in the embodiments. Substantially the same configurations mean configurations having the same functions and methods, for example. The invention also includes configurations obtained by replacing non-essential elements of the configurations described in the embodiments with other elements. The invention further includes configurations obtained by adding known art to the configurations described in the embodiments.

## Claims

1. An automated analyzer comprising:
a first turntable that holds a plurality of pre-treatment containers;
a first dispensing probe that dispenses a specimen and pre-treatment liquid into one of the pre-treatment containers and generates a pre-treated specimen;
a second turntable that holds a plurality of reaction containers;
a second dispensing probe that sucks the pre-treated specimen from one of the pre-treatment containers and dispenses the sucked pre-treated specimen into one of the reaction containers;
a measurement unit that measures the pre-treated specimen stored in one of the reaction containers;
a management unit that determines an order in which the pre-treated specimen stored in one of the pre-treatment containers is dispensed by the second dispensing probe, based on priority of the pre-treated specimen, when the pre-treated specimen becomes dispensable into one of the reaction containers; and
a control unit that causes the second dispensing probe to dispense the pre-treated specimen in accordance with the order determined by the management unit.

2. The automated analyzer according to claim 1, further comprising:
a stirring mechanism that stirs the pre-treated specimen stored in one of the pre-treatment containers, wherein
the pre-treated specimen stored in one of the pre-treatment containers becomes dispensable into one of the reaction containers after stirring by the stirring mechanism.

3. The automated analyzer according to claim 1 or 2, wherein
when a first pre-treated specimen dispensed into one of the pre-treatment containers becomes dispensable into one of the reaction containers followed by a second pre-treated specimen having priority higher than priority of the first pre-treated specimen, the management unit sets an order of the second pre-treated specimen before an order of the first pre-treated specimen.

4. The automated analyzer according to claim 1 or 2, wherein
when the second dispensing probe does not dispense a first pre-treated specimen which is stored in one of the pre-treatment containers and has reached a predetermined position, the management unit changes priority of the first pre-treated specimen from a first priority to a second priority which is higher than the first priority.

5. The automated analyzer according to claim 1 or 2, wherein
when the second dispensing probe does not dispense a first pre-treated specimen after a predetermined number of cycles have passed since the first dispensing probe dispensed the first pre-treated specimen into one of the pre-treatment containers, the management unit changes priority of the first pre-treated specimen from a first priority to a second priority which is higher than the first priority.

6. The automated analyzer according to any one of claims 1 to 3, wherein
on the first turntable, each of the pre-treatment containers moves from a dispensing position at which a specimen and the pre-treatment liquid is dispensed into one of the pre-treatment containers to a dispensable position at which the pre-treated specimen becomes dispensable into one of the reaction containers, via a predetermined number of positions;
on the first turntable, each of the pre-treatment containers moves from a first position to a cleaning-start position at which cleaning of the pre-treatment container is started, via the predetermined number of positions;
each of the pre-treatment containers reaches a second position followed by the cleaning-start position; and
when the pre-treated specimen is disposed at each of positions from the dispensing position to a position which is one position before the dispensable position, the management unit changes the priority of the pre-treated specimen disposed at each of positions from the first position to the second position from a first priority to a second priority which is higher than the first priority.

7. The automated analyzer according to claim 1 or 2, wherein
the second turntable has a first line on which a plurality of first reaction containers are aligned and a second line on which a plurality of second reaction containers are aligned, and
the control unit causes the second dispensing probe to dispense the pre-treated specimen with the priority lower than a first priority into one of the first reaction containers and dispense the pre-treated specimen with the priority equal to or higher than the first priority into one of the second reaction containers.

8. A method of controlling an automated analyzer including:
a first turntable that holds a plurality of pre-treatment containers;
a first dispensing probe that dispenses a specimen and pre-treatment liquid into one of the pre-treatment containers and generates a pre-treated specimen;
a second turntable that holds a plurality of reaction containers;
a second dispensing probe that sucks the pre-treated specimen from one of the pre-treatment containers and dispenses the sucked pre-treated specimen into one of the reaction containers; and
a measurement unit that measures the pre-treated specimen stored in one of the reaction containers,
the method comprising:
a process of determining an order in which the pre-treated specimen stored in one of the pre-treatment containers is dispensed by the second dispensing probe, based on priority of the pre-treated specimen, when the pre-treated specimen becomes dispensable into one of the reaction containers; and
a process of causing the second dispensing probe to dispense the pre-treated specimen in accordance with the determined order.
